# EUROPEAN PATENT APPLICATION

(11) **EP 1 466 530 A1**
(43) Date of publication of application: **13.10.2004**
(21) Application number: 02790873.0
(22) Date of filing: 25.12.2002
(51) Int. Cl.: A23F 3/16

(54) **PROCESS FOR PRODUCING TEA DRINK AND TEA DRINK PRODUCT**

(30) Priority: 28.12.2001 JP 2001400731
(71) Applicant: Amano Enzyme Inc., Nagoya-shi, Aichi 460-0003 (JP)
(72) Inventor: TSURUHAMI, Kazutaka, Kakamigahara-shi, Gifu 509-0108 (JP); MORI, Shigeharu, Gifu R & D Ctr, AMANO ENZYME Inc., Kakamigahara-shi, Gifu 509-0108 (JP); SAKATA, Kanzo, Institute for Chemical Research, Uji-shi, Kyoto 611-0011 (JP)
(74) Representative: Steinecke, Peter, Dr.
(86) International application number: PCT/JP2002/013560
(87) International publication number: WO 2003/056930

(57) **Abstract**

There is provided a method of producing a tea beverage having a further reinforced or improved flavor. Further provided is a method of producing a tea beverage having an improved flavor, with good productivity and stable quality. In the process of producing a tea beverage, a diglycosidase derived from a microorganism is allowed to act.

## Description

### TECHNICAL FIELD

The present invention relates to methods of producing a tea beverage and a tea leaf for tea beverage. More specifically, the present invention relates to methods of producing a tea beverage having an improved flavor and a tea leaf for the tea beverage. By applying the present invention to production of tea beverages such as green tea, Oolong tea, black tea and the like, tea beverages having an excellent flavor can be provided.

### BACKGROUND ART

Raw material tea leaves such as green tea, Oolong tea and the like contain various aroma components. Extraction of these aroma components in a production process gives tea beverages having characteristic flavors corresponding to raw material tea leaves and processing and treatment methods. It is known that mainly alcohol-based aroma components such as geraniol, linalool and the like among aroma components of tea are present in the form of precursor, disaccharide glycoside in a tea leaf (J. Appl. Glycosci., vol. 45, No. 2, pp. 123 to 129 (1998)). On the other hand, the presence of β-primeverosidase which is an enzyme acting on the disaccharide glycoside to liberate an aroma component is confirmed in tea leaves, and it is believed that formation of an environment under which this enzyme acts in a process of producing a tea plays an important role in forming a flavor specific to tea. Methods of extraction and purification and physicochemical natures of β-primeverosidase which is derived from tea leaves have been reported (Japanese Patent Application Laid-Open No. (HEI) 8-1460675).

### DISCLOSURE OF INVENTION

As typified by recent boom, a need for tea beverages by consumers is high, and particularly, there is required a provision of tea beverages having affluent aromas and high quality.

Meanwhile, it is believed possible to add separately the above-mentioned β-primeverosidase derived from tea leaves in a process of producing a tea beverage, to liberate an aroma component from a precursor of an aroma component present in a tea leaf to try to improve the flavor of a tea beverage.

However, the width of a substrate on which β-primeverosidase derived from tea leaves act is narrow, and even if the enzyme is separately added, it can only act on a precursor of some aroma components, and effective or efficient improvement in aroma cannot be expected. In a process of producing a tea beverage, β-primeverosidase originally present in a raw material tea leaf acts, consequently, even if β-primeverosidase derived from tea leaves is again added and allowed to act, efficient extraction of an aroma component cannot be expected. For example, in production of black tea, a series of processes such as withering, rolling, fermentation and drying are conducted without a heat treatment process of such extent as to deactivate the enzyme. Accordingly, an environment under which the enzyme can sufficiently act is present in the production process, consequently, it is believed that even if the same kind of enzyme derived from tea leaves is again added, improvement in flavor cannot be expected.

On the other hand, for preparing β-primeverosidase derived from tea leaves, it is necessary to conduct a crush process, various extraction processes, refining process and the like using raw tea leaves as a starting material, consequently, processes necessary for preparation are complicated and additionally, large scale preparation is difficult. Further, the amount of an enzyme contained, enzymatic activity and the like differ depending on the kind of raw tea leaves as a starting material, therefore, it is difficult to stably supply a homogeneous enzyme.

The present invention has been made in view of the above-mentioned problems, and an object thereof is to provide a method of producing a tea beverage having a further improved flavor. Particularly, it is an object to provide a method of extracting an aroma component which cannot be extracted by β-primeverosidase derived from tea leaves, thereby to produce a tea beverage having an excellent flavor. It is also an object to provide a method of producing a tea beverage having an improved flavor with excellent productivity and stable quality. Further, it is an object to provide a tea leaf for tea beverage, which can be utilized for these productions of tea beverages.

Under the above-mentioned objects, the present inventors have intensively studied, and resultantly found that by adding a diglycosidase derived from a microorganism and allowing this to act in a process of producing a tea beverage, a tea aroma component can be efficiently extracted and a tea beverage having an extremely excellent flavor can be produced. The present invention is based on such findings and the constitutions are as described below.
[1] A method of producing a tea beverage, comprising an enzyme treatment process of allowing a diglycosidase derived from a microorganism to act.
[2] The production method according to [1], wherein said enzyme treatment process comprises adding a diglycosidase derived from a microorganism in part of the process of producing a tea leaf for tea beverage.
[3] The production method according to [2], wherein said part of the process of producing is one or more selected from a coarse rolling process, rolling process, intermediate kneading process and fine kneading process.
[4] The production method according to [1], wherein said enzyme treatment process comprises adding a diglycosidase derived from a microorganism and causing an enzymatic reaction, in extracting a tea from a tea leaf for tea beverage or on an extracted tea.
[5] A method of producing a tea beverage, characterized by adding a diglycosidase derived from a microorganism in a rolling process.
[6] The production method according to any of [1] to [5], wherein said diglycosidase is derived from Penicillium multicolor.
[7] The production method according to any of [1] to [5], wherein said diglycosidase is derived from Aspergillus fumigatus.
[8] The production method according to any of [1] to [7], wherein said tea beverage is a non-fermented tea, semi-fermented tea, complete-fermented tea or post-fermented tea or a blend tea containing two or more of them.
[9] A tea beverage produced by the production method according to any of [1] to [8].
[10] A tea beverage having a flavor improved by the action of a diglycosidase derived from a microorganism.
[11] A method of producing a tea leaf for tea beverage, comprising an enzyme treatment process of allowing a diglycosidase derived from a microorganism to act on a tea leaf.
[12] The production method according to [11], wherein said enzyme treatment process comprises adding a diglycosidase derived from a microorganism in part of the process of producing a tea leaf for tea beverage.
[13] The production method according to [12], wherein said part of the process of producing is one or more selected from a coarse rolling process, rolling process, intermediate rolling process and fine rolling process.
[14] A method of producing a tea leaf for tea beverage, comprising adding a diglycosidase derived from a microorganism in a rolling process.
[15] The production method according to any one of [11] to [14], wherein said diglycosidase is derived from Penicillium multicolor.
[16] The production method according to any one of [11] to [14], wherein said diglycosidase is derived from Aspergillus fumigatus.
[17] The production method according to any one of [11] to [16], wherein said tea leaf for tea beverage is a non-fermented tea, semi-fermented tea, fermented tea or post-fermented tea or a blend tea containing two or more of them.
[18] A tea leaf for tea beverage produced by the production method according to any one of [11] to [17].
[19] A tea leaf for tea beverage having a flavor improved by the action of a diglycosidase derived from a microorganism.
[20] A tea leaf for tea beverage containing an added diglycosidase derived from a microorganism.
[ 21 ] An instant tea comprising a liquid or powder composition prepared by concentrating a tea beverage, and a diglycosidase derived from a microorganism.

In the above-mentioned production method, a tea leaf for tea beverage which can be utilized for a tea beverage having an aromatic component extracted to improve flavor, in other words, of rich flavor or for production of such a tea beverage can be obtained, by the action of a diglycosidase derived from a microorganism on a precursor (disaccharide glycoside) of an aromatic component contained in a tea leaf. The diglycosidase derived from a microorganism used in the present invention can act on a wider range of substrates as compared with the same kind of enzyme (β-primeverosidase) contained in a tea leaf, namely, can act also on a precursor (disaccharide glycoside) of an aroma component which is a substrate on which this enzyme (β-primeverosidase) cannot act. Therefore, an aroma component can be extracted from such a precursor of an aroma component to effectively and efficiently improve flavor.

By adopting an enzyme derived from a microorganism, a homogeneous enzyme can be prepared in large amount, resultantly, an enzymatic reaction can be conducted with good reproducibility. Therefore, irregularity in flavor depending on production lot can be prevented and production of a tea beverage of more stable quality becomes possible.

Further, a diglycosidase derived from a microorganism is excellent in heat stability, resultantly, the temperature range in which it can act is wider, and it is advantageous for production process.

In the present specification, "improvement in flavor" is used as a term including reinforcement of flavor, and indicates that the amount of aroma components present in a tea beverage increases to give rich flavor. For example, the term includes a condition of reinforced fresh odor and sweet odor. In the present specification, the term "improvement in flavor" also includes that by increase of the amount of a certain specific aroma component, feeling of other aroma component changes indirectly, resultantly, impression of aroma received totally varies.

On the other hand, the term "usual production process" in the present specification includes production processes not containing the enzyme treatment process in the present invention. The concept of the usual production process includes not only usually conducted processes for producing a tea leaf for tea beverage or a tea beverage, but also production processes which are adopted to produce specific tea leaves for tea beverage or tea beverages (for example, tea beverages to which a flavor has been added, and the like). Likewise, the term "usual production method" in the present specification includes not only usually conducted methods for producing a tea leaf for tea beverage or a tea beverage, but also production methods which are adopted to produce specific tea leaves for tea beverage or tea beverages. In the present specification, a tea leaf capable of providing a tea beverage by extraction with water or hot water is called a tea leaf for tea beverage, and distinguished from leaves only plucked and not processed yet and leaves on the way of processing, and the like.

Simple expression diglycosidase in the present specification means a diglycosidase derived from a microorganism. In the present specification, % denotes % (w/v), unless otherwise stated.

### BEST MODE FOR CARRYING OUT THE INVENTION

One aspect of the present invention relates to a method of producing a tea beverage, being characterized in that it comprises an enzyme treatment process of allowing a diglycosidase derived from a microorganism to act (hereinafter, abbreviated as "enzyme treatment process", in some cases).

The kind of tea beverages to which the present invention is applied is not particularly restricted, and the tea beverage of the present invention includes non-fermented teas such as decocted tea, superior tea, powdered tea, coarse tea, roasted tea, brown rice tea and the like, semi-fermented teas such as Oolong tea, seed-wrapped tea and the like, complete-fermented teas such as black tea and the like, and post-fermented teas such as AWA coarse tea, DAN tea, KOKU tea, GOISHI tea, Poir tea and the like. Blend teas obtained by mixing two or more teas selected optionally from these teas (that is, teas obtained by blending tea beverages based on different raw material tea leaves and/or production processes) are also included in the tea beverage of the present invention. The blend tea referred to herein include not only those obtained by blending final products (tea beverages) but also those obtained by mixing raw material tea leaves or blending intermediate produces on the way of production. Further, flavor teas, fruit teas and the like to which aromas, fruit juice, dairy products and the like have been separately added are also included in the tea beverage of the present invention.

In the present invention, the diglycosidase indicates an enzyme classified into sugar chain hydrolysis enzymes, its substrate can be a what is called glycoside composed by bonding of compounds other than sugars constituting a glycoside (hereinafter, referred to as "aglycon") and a linear or branched sugar chain constituted of single or a plurality of saccharides via a hydroxyl group of a sugar chain, and which recognizes and cuts a substrate by a disaccharide unit.

As the diglycosidase derived from a microorganism which can be used in the present invention, there are listed diglycosidases produced by various microorganisms such as Aspergillus genus, Penicillium genus, Rhizopus genus, Rhizomucor genus, Talaromyces genus, Mortierella genus, Cryptococcus genus, Microbacterium genus, Corynebacterium genus, Actinoplanes genus and the like of which diglycosidase activity has been confirmed.

As the more suitable diglycosidase derived from a microorganism, there are listed diglycosidases produced Aspergillus niger IFO 4407 (available from Foundation Fermentation laboratory, Honmachi 2-17-85,Juso,Yodogawa district,Osaka city), Aspergillus niger IAM 2020, Aspergillus fumigatus IAM 2046 and Penicillium multicolor IAM 7153 (available from Tokyo University, Molecule Cell Biology laboratory, Yayoi 1-1-1, Bunkyo district, Tokyo) of which diglycosidase production ability has been confirmed.

The particularly preferable diglycosidase derived from a microorganism is a diglycosidase produced by Penicillium multicolor IAM 7153 strain. ß-galactosidase derived from Penicillium multicolor is an enzyme of which safety has been recognized described in the food additive list, and a diglycosidase produced from such a highly safe fungus is also guessed to have high safety.

For producing a diglycosidase using the above-mentioned various microorganisms, methods and conditions suitable for culturing the microorganisms are appropriately set. For example, as the method of culturing the above-mentioned various fungal strains, any of liquid culturingmethods and solid culturingmethods can be adopted, and liquid culturing methods are suitable. The liquid culturing can be conducted, for example, as described below.

The medium may be any one providing it is a medium in which a microorganism producing a diglycosidase can grow. For example, media to which carbon sources such as glucose, sucrose, gentiobiose, soluble starch, glycerin, dextrin, molasses, organic acids and the like, further, nitrogen sources such as ammonium sulfate, ammonium carbonate, ammonium phosphate, ammonium acetate or, peptone, yeast extract, corn steep liquor, casein hydrolyzate, bran, meat extract and the like, further, inorganic salts such as potassium salts, magnesium salts, sodium salts, phosphates, manganese salts, iron salts, zinc salts and the like have been added can be used.

Furthermore, it is possible to add various inducers to a medium to produce and accumulate a diglycosidase. As the inducer, for example, saccharides can be used, and preferably, gentose (for example, Gentose #80, manufactured by Nippon Shokuhin Kako K.K.), gentibiose, gentio oligosaccharide (for example, Gentio oligosaccharide, manufactured by Wako Pure Chemical Industries Ltd.), galactomannan and the like can be utilized. The addition amount of these inducers is not particularly limited providing it is an amount at which an ability of producing the intended diglycosidase is increased, and preferably, the addition amount is 0.01 to 10%.

Culturing under aerobic conditions is conducted at a pH of a medium controlled at, for example, about 3 to 8, preferably about 5 to 6, and a culturing temperature of usually about 10 to 50°C preferably about 25 to 30° C, for 1 to 15 days, preferably for 4 to 7 days. As the culturing method, for example, a shaking culturing method, an aerobic deep portion culturing method by a jar fermenter, can be used. However, the above-mentioned various culturing conditions and the like are not limited providing these are appropriately altered depending on the culturing subject, microorganisms and cells, and a diglycosidase of the present invention is produced.

For isolation and purification of a diglycosidase from the resulted culture solution, centrifugal separation, UF concentration, salting out, and various chromatography using ion exchange resins and the like are combined utilizing a diglycosidase activity as an index, and a treatment is effected according to a normal method, to obtain a purified diglycosidase (reference literature: Tanpakushitsu · Kouso no Kiso Jikken hou, written by Buichi Osuo, published by NANKO DO). In the present invention, as the diglycosidase derived from a microorganism, culture solution in which the above-mentioned microorganism producing a diglycosidase is cultured can be utilized as it is. Of course, the degree of purification of this culture solution can be appropriately changed depending on the use object of the present invention, and for example, a crude diglycosidase described in Example 1 mentioned later can also be used in the present invention as that having an efficacy equivalent to that of a purified diglycosidase.

A diglycosidase derived from a microorganism obtained by the above-mentioned method can extract an aroma component also from a disaccharide glycoside on which β-primeverosidase derived from a tea leaf cannot act, and an excellent flavor improvement effect can be expected.

It is preferable to conduct the enzyme treatment process in the present invention simultaneously with part of processes of producing a tea beverage. The reason for this is that there is no necessity to provide an enzyme treatment process separately and production efficiency can be improved. For example, general processes of producing a green tea beverage include processes of plucking, steaming, coarse kneading, rolling, intermediate kneading, fine kneading, drying (these are processes for producing a tea leaf for tea beverage) and extraction, and any of them or several processes thereof can be conducted under a condition containing a diglycosidase added. General processes of producing a semi-fermented tea such as Oolong tea and the like include processes of plucking, sun curing withering, room withering and stirring, leaf-frying, rolling, ball breaking, drying (these are processes for producing a tea leaf for tea beverage) and extraction, and any of them or several processes thereof can be conducted under a condition containing a diglycosidase added. Likewise, General processes of producing a complete-fermented tea such as black tea and the like include processes of plucking, withering, rolling, fermentation, drying (these are processes for producing a tea leaf for tea beverage) and extraction, and any of them or several processes thereof can be conducted under a condition containing a diglycosidase added.

By conducting part of processes of producing a tea beverage under a condition containing a diglycosidase added, the original processing treatment and an enzyme treatment with a diglycosidase are conducted simultaneously in the processes.

Here, it is preferable to select any (or some) of coarse kneading, rolling, intermediate kneading and fine kneading, as the processes to be subjected to an enzyme treatment, in the case of green tea. Particularly, it is preferable to add a diglycosidase in a kneading process and/or intermediate kneading process and conduct an enzyme treatment, since part of tea leaf tissue is broken to cause a condition under which an enzyme acts easily, the processing temperature is suitable for an enzymatic treatment, and during the process, stirring is continuously maintained to give easy uniform dispersion of a diglycosidase, and the like. Particularly preferably, a diglycosidase is added and an enzyme treatment is conducted in a rolling process. Because of the same reason, in the case of a semi-fermented tea such as Oolong tea and the like, it is preferable to select any (or some) of sun curing withering, room withering and stirring, rolling and ball breaking as the process to be subjected to an enzyme treatment, and it is further preferable to select a rolling process and/or ball breaking process. Of them, a rolling process is particularly preferably selected. Likewise, in the case of a complete-fermented tea such as black tea and the like, it is preferable to select a rolling process and/or fermentation process as the process to be subjected to an enzyme treatment.

In the case of conducting part of usual production processes under a condition containing a diglycosidase added as described above, it is not necessarily required to add a diglycosidase at the initiation of the process, and a diglycosidase may also be added in a suitable period during the process. By this, the action time of an enzyme can be regulated and it becomes possible to achieve desired extent of improvement in flavor. In conducting an enzyme treatment, the process temperature in the process can be controlled so that an enzyme reaction is carried out successfully.

On the other hand, the enzyme treatment process in the present invention can also be conducted as an independent process. In the case of conducting an enzyme treatment process simultaneously with other process, it is, in some cases, necessary to consider an influence exerted on the processing treatment efficiency and the like of the other process by addition of an enzyme, however, consideration of such an influence becomes unnecessary by making the enzyme treatment process independent. This means that preferable temperature condition, pH condition and the like can be set freely in an enzyme treatment process, enabling an efficient enzyme treatment.

In the case of conducting an enzyme treatment process as an independent process, an enzyme treatment process can be conducted, for example, before or after any or some processes of the above-mentioned general production processes (in the case of green tea, processes of plucking, steaming, coarse kneading, rolling, intermediate kneading, fine kneading, drying and extraction, in the case of a semi-fermented tea such as Oolong tea and the like, processes of plucking, sun curing withering, room withering and stirring, leaf frying, rolling, ball breaking, drying and extraction, in the case of general processes of producing a complete-fermented tea such as black tea and the like, processes of plucking, rolling, fermentation, drying and extraction).

A diglycosidase can be added to cause an enzyme treatment in a process (extraction process) of extracting a tea from a processing-treated tea leaf (tea leaf for tea beverage). Here, in the case conducting an extraction process using hot water of high temperature, it is preferable to add a diglycosidase to cause an enzyme reaction after the temperature of extraction liquid decreases lower than the temperature at which a diglycosidase is deactivated, so as to prevent deactivation of an enzyme and to progress an excellent enzyme reaction. For example, it is preferable to add a diglycosidase to cause an enzyme reaction (enzyme treatment process) after the temperature of extraction liquid decreases to about 60° C or lower. Further, it is preferable to maintain extraction liquid to which a diglycosidase has been added at temperatures suitable for an enzyme reaction for given time, so that an enzyme treatment is conducted efficiently. On the other hand, it is also possible to effect an enzyme treatment by adding a diglycosidase to a solution obtained by dissolution into a solvent such as water and the like of a material obtained by once drying, according to spray dry or freeze dry and the like, extraction liquid (tea beverage) obtained as a result of a series of tea beverage production processes (for example, in the case of green tea, plucking, steaming, coarse kneading, rolling, intermediate kneading, fine kneading, drying and extraction processes).

Further, it is also possible, for example, to add a diglycosidase to extraction liquid such as commercially available tea leaves (including tea bags) and conduct an enzyme treatment in the present invention, to improve flavor.

It is preferable to conduct a heat treatment, in a suitable period after an enzyme treatment process, so as to terminate the action of a diglycosidase added. For example, by heating at 70° C for 30 minutes, a diglycosidase can be deactivated. Such a heat treatment usually can be replaced by a drying process and the like in processes of producing a tea beverage. The action of a diglycosidase can be terminated also by adding an acid or alkali to change pH.

Addition of a diglycosidase can be conducted by direct addition to a tea leaf of the above-mentioned diglycosidase crude enzyme or refined enzyme prepared in the form of liquid or powder. In the case of addition in a tea leaf processing treatment process, it is preferable, for example, to add a diglycosidase crude enzyme or refined enzyme in the form of liquid by spraying, so that a diglycosidase is added on the whole surface of a tea leaf without irregularity and an efficient enzyme reaction is effected.

The use amount of a diglycos idase derived from a microorganism in an enzyme treatment process in the present invention can be appropriatelydeterminedinviewof extent of necessary improvement in f lavor, the condition of a tea leaf in an enzyme treatment process, and the like. In the case of conducting an enzyme treatment in tea leaf processing processes (processes of producing a tea leaf for tea beverage), a diglycosidase can be used, for example, in an amount of 0.01 to 100000 units, preferably 2.0 to 10000 units, further preferably 15 to 3000 units based on 100 g of a tea leaf. In the case of extracting a tea from a tea leaf for tea beverage or of conducting an enzyme treatment on an extracted tea, a diglycosidase can be used for example in an amount of 0.01 to 50000 units, preferably 1.0 to 5000 units, further preferably 5.0 to 1000 units based on 100 ml of tea to be extracted, though the use amount varies depending on the amount of a tea leaf for tea beverage used. Also in this case, the use amount of an enzyme can be set based on the amount of a tea leaf for tea beverage subjected to extraction.

When the use amount of a diglycosidase is too small, there is a possibility that the intended flavor improvement effect is not obtained sufficiently, while when too large, production cost increases, and additionally, there is a possibility of deterioration of flavor by the action and taste of extraneous materials present in a diglycosidase, undesirably.

The temperature when a diglycosidase is added and allowed to act is usually from 20 to 70° C, preferably from 30 to 65° C, more preferably from 40 to 60° C, particularly preferably from 50 to 55°C. When the action temperature is lower than the above-mentioned usual range, the action of a diglycosidase is not manifested sufficiently and an effect of improving flavor is not obtained easily, and when higher than the above-mentioned usual range, a diglycosidase is deactivated easily and a component in a tea leaf receives thermal deformation and deforms, causing a possibility of deterioration of flavor.

On the other hand, pH at which a diglycosidase is allowed to act is usually from 2.0 to 8.0, preferably from 3.0 to 7.0, more preferably from 4.0 to 6.0, particularly preferably from 4.5 to 5.5. When action pH is lower than or higher than the above-mentioned usual range, the action of diglycosidase is not manifested sufficiently and an effect of improving flavor is not obtained easily, and a component in a tea leaf tends to receive deformation, causing a possibility of deterioration of flavor.

A method of producing a tea beverage characterized in that an enzyme treatment process is conducted with a diglycosidase derived from a microorganism has been described above, and according to processes before an extraction process (including an enzyme treatment process with a diglycosidase) in the above-mentioned production method, there is provided a method of producing a tea leaf for tea beverage by which a tea beverage having an improved flavor is obtained in extraction (another aspect of the present invention).

On the other hand, a tea leaf obtained adding the above-mentioned diglycosidase derived from a microorganism to a tea leaf for tea beverage processing-treated according to a usual production method can be utilized as a tea leaf for tea beverage having an improved flavor. For example, a solution containing a diglycosidase is added to a tea leaf such as green tea, Oolong tea, black tea or the like produced by the above-mentioned usual production method and if necessary, the leaf is dried. When an extraction operation is conducted under a condition causing no deactivation of an enzyme using a tea leaf subjected to such processing-treatment, a diglycosidase acts on a precursor of an aroma component present in a tea leaf or extracted from a tea leaf, in extraction, and an aroma component can be produced in extraction liquid (tea beverage).

Further, by adding the above-mentioned diglycosidase derived from a microorganism to a liquid or powder composition obtained by concentrating a tea beverage produced by a usual production method, a so-called instant tea capable of giving a tea beverage having an improved flavor in dilution or dissolution can be constituted.

The present invention will be illustrated in detail below by examples, but the scope of the invention is not limited only to these examples.

### [Example 1] Preparation of diglycosidase derived from microorganism

### (1-1) Culturing of diglycosidase using Penicillium multicolor IAM 7153 strain

A growth medium (pH 5.6) containing 2.0% of defatted soybean, 3.0% of glucose, 0.5% of potassium dihydrogen phosphate, 0.4% of ammonium sulfate and 0.3% of dry yeast was sterilized at 121°C for 20 minutes. On 100 mL of the sterilized medium, 1 oese of a produced fungus was inoculated and pre-culturing was conducted at 27° C and a shaking speed of 140 min⁻¹. Five days after, 20 L of a main medium of pH 4.9 containing 1.0% of Sunfiber R, 2.0% of potassium dihydrogen phosphate, 1.0% of ammonium sulfate and 3.13% of Meast PIG was sterilized as 121°C for 20 minutes in a jar fermenter having a volume of 30 L while stirring at 150 min⁻¹. To this main culture medium was inoculated the medium of pre-culturing in a proportion of 1.5% (v/v), and cultured at 27±1° C for 8 days at a stirring number of 250 min⁻¹, a ventilation amount of 0.75 vvm (15 L/min) and an internal pressure of 0.5 Kg/cm² (48 kPa).

### (1-2) Purification of diglycosidase

To a culture broth was added Zemlight Super 56M and Fine Flow A as a filtration assistant each in a proportion of 2% based on the total liquid amount, and filtrated through diatomaceous earth. This was concentrated to 20 times through a ultrafiltration membrane UF AIP-2020 (MW 6, 000), and substituted by a 20 mM acetate buffer of pH 4.7. This was sterile-filtrated and lyophilized to give a crude diglycosidase. To the above-mentioned ultrafiltration-concentrated liquid was added ammonium sulfate, and salted out with 50% saturated ammonium sulfate. The resulted precipitate was removed, and ammonium sulfate was further added to the supernatant and salted out with 80% saturated ammonium sulfate. The precipitate was recovered, and dissolved in a 20 mM acetate buffer of pH 4.7. The dissolved liquidwas passed through a 10-DG column (BioRad Co.), and the buffer was exchanged for a 20 mM acetate buffer of pH 4.7 containing 30% saturated ammonium sulfate. This solution was applied to hydrophobic chromatography (HiLoad 16/10 Phenyl Sepharose High Performance (Pharmacia)), and a fraction showing a diglycosidase activity was separated from fractions of ß-glycosidase activity and ß-xylodase activity. At room temperature, elution was initiated with a 20 mM acetate buffer containing 30 to 0% saturated ammonium sulfate at a flow rate of 2 mL/min, and eluted at a linear gradient of 30% saturated ammonium sulfate. A fraction showing a diglycosidase activity at a saturated ammonium sulfate concentration of 10 to 12.5% was eluted. The recovered diglycosidase fraction was concentrated and centrifugally separated to give a supernatant which was applied to a 10-DG column and the dissolved liquid was exchanged for 25 mM Tris hydrochloride buffer of pH 7.1. This liquid was applied to isoelectric point chromatography (Mono-P HR5/20 (Pharmacia)), and elution was initiated with Polybuffer 74 of pH 5.0 at a rate of 1 mL/min at room temperature. The intended diglycosidase activity was elution at pH 6.2 to pH 6.3. A single band obtained in SDS electrophoresis of this fraction showed that a diglycosidase could be purified. Hereinafter, this diglycosidase was called also as a purified diglycosidase.

### (1-3) Method of measuring diglycosidase activity

Using an automatic chemical analysis apparatus (manufactured by Toshiba Corp., TBA-30R), 30 µL of a diglycosidase sample is mixed with 200 µL of a solution prepared by dissolving p-nitrophenyl (pNP) primeveroside in an acetate buffer (pH 5.5) so as to give a concentration of 2 mM, and they are reacted at 40°C for 9.75 minutes with a cycle time of 22.5 seconds, then, 250 µL of sodium carbonate is added and the absorbancy at 412 nm is measured. A blank derived from a sample is measured in the same manner using a 20 mM acetate buffer (pH 5.5) instead of a substrate solution. Under this condition, the amount of an enzyme increasing absorbancy by 1 is called 1 unit.

The above-mentioned pNP-primeveroside was synthesized by reacting pNP-glucoside (Merk) with xylooligosaccharide (Wako Pure Chemical Industries Ltd.) using an enzyme xylosidase (Sigma) and shifting xylose to pNP-glucoside by one residue by β-1,6 bond.

### [Example 2] Evaluation of effect of improving flavor on green tea

### (2-1) Evaluation by instrumental analysis

### (1) Preparation of green tea extraction liquid

To 2 g of tea leaves (Ooi ocha (trade name: kettle decocted green tea, manufactured by Ito-En Ltd.) was added 50 mL of boiling water and boiled for 1 minute. This was filtrated (No. 2 filter paper) to remove insoluble components and the resulted filtrate was used as green tea leaf extraction liquid.

On the other hand, to 1 pack (2 g) of decocted tea bag (manufactured by Japanese Tea Sales Ltd.) was added 50 mL of boiling water and boiled for 30 seconds. This was filtrated (No. 2 filter paper) to remove insoluble components and the resulted filtrate was used as instant green tea extraction liquid.

### (2) Enzyme treatment of green tea extraction liquid (green tea leaf extraction liquid, instant green tea extraction liquid)

To 20 mL of a green tea leaf extraction liquid was added the diglycosidase prepared in Example 1, and an enzyme treatment was conducted. Treatment conditions included 55° C and 3 hours. A group of addition of a crude diglycosidase and a group of addition of a purified diglycosidase were provided. The crude diglycosidase group had four divisions depending on difference in addition amount (addition amount: 5.2 to 1040 units) and the purified diglycosidase group had one division (addition amount: 52 units). A group of no addition of diglycosidase (no addition) was used as a control.

### (3) Measurement and evaluation of aroma component

After an enzyme treatment, identification of an aroma component in each extraction liquid was conducted by gas chromatography/mass spectrometry (GC/MS, product number "HP6890 GC/HP5973MSD", manufactured Agilent Technologies). The measurement results are shown in the following Tables 1 and 2.

**(Table 1)**

| green tea leaf extraction liquid | | | | | | |
|---|---|---|---|---|---|---|
| diglycosidase activity (unit) | | | | | | |
| crude enzyme | | | purified enzyme | | no addition | compound name |
| 1040 | 520 | 52 | 5.2 | 52 | | |
| 167414 ∞ | 135694 ∞ | 61920 ∞ | N.D. - | 60284 ∞ | N.D. - | Limonene |
| 2053147 7.6 | 2328978 8.7 | 1204867 4.5 | 1255739 4.7 | 1227035 4.6 | 268396 1.0 | (Z)-3-Hexenol |
| 142494 ∞ | 155832 ∞ | N.D. - | N.D. - | N.D. - | N.D. - | (Z)-Linalool oxide |
| 212238 ∞ | 187823 ∞ | N.D. - | N.D. - | N.D. - | N.D. - | (E)-Linalool oxide |
| 2918597 4.3 | 3044243 4.5 | 3083261 4.5 | 2902877 4.3 | 2918035 4.3 | 682886 1.0 | Benzaldehyde |
| 5539577 17.8 | 3807528 12.2 | 736214 2.4 | 428046 1.4 | 730894 2.3 | 311131 1.0 | Linalool |
| 323270 7.2 | 289633 6.5 | 87635 2.0 | 67537 1.5 | 84923 1.9 | 44893 1.0 | Geranial |
| 423636 ∞ | 595017 ∞ | 284143 ∞ | N.D. - | 277301 ∞ | N.D. - | Geraniol |
| 223523 ∞ | 265916 ∞ | 126717 ∞ | 77061 ∞ | 126230 ∞ | N.D. - | Methyl salicylate |
| 927722 ∞ | 986077 ∞ | 720496 ∞ | 277357 ∞ | 700835 ∞ | N.D. - | Benzyl alcohol |
| 274011 ∞ | 247049 ∞ | N.D. - | N.D. - | N.D. - | N.D. - | Phenyl ethyl alcohol |

Regarding numerical values in the table, that on the upper stage shows peak area and that on the lower stage shows ratio against no addition. N.D. represents the detection limit or less.

As shown in Table 1, both in the crude diglycosidase group and purified diglycosidase group, the amount of each aroma component increases. Therefore, it is found that by addition of a diglycosidase, an aroma component in green tea extraction liquid can be extracted, to improve flavor. In the case of treatment with a purified diglycosidase and in the case of treatment with a crude diglycosidase containing a diglycosidase of the same activity, the addition amount of each aroma component is approximately the same, showing that the diglycosidase plays a central role in the increase action of an aroma component. Since the amount of increase of an aroma component differs depending on the addition amount of a diglycosidase (crude diglycosidase group), the amount of an each aroma component can be changed by controlling the addition amount of a diglycosidase, resultantly, a green tea beverage having various aroma balance can be produced.

(Z)-3-Hexenol is called green leaf alcohol, implying an image of fresh green aroma of browse. Linalool oxide implies and image of fresh trefoil. Linalool, Geraniol, Benzyl alcohol and Phenyl ethyl alcohol are all compounds implying an image of an aroma of flower, and it is known that Linalool implies an image of convallariaceous aroma, Genaniol and Phenyl ethyl alcohol imply an image of rose aroma, and Benzyl alcohol implicates an image of hyacinth and jasmine-like aroma. Methyl salicylate is one of main aroma components of black tea. Geraniol is known as an aroma component of citrus fruits such as grape fruit, orange, lemon and the like.

**(Table 2)**

| effect in instant green tea extraction liquid | | | | | |
|---|---|---|---|---|---|
| diglycosidase activity (unit) | | | | | |
| crude enzyme | | | purified enzyme | no addition | compound name |
| 260 | 52 | 5.2 | 52 | | |
| 189147 ∞ | 74826 ∞ | N.D. - | 25865 ∞ | N.D. - | Limonene |
| 196777 1.5 | 149273 1.2 | 88587 0.7 | 145590 1.1 | 129312 1.0 | (Z)-Ocimene |
| 256343 ∞ | 126500 ∞ | N.D. - | 112054 ∞ | N.D. - | (E)-Ocimene |
| 98707 ∞ | 50486 ∞ | 44987 ∞ | 24376 ∞ | N.D. - | Terpinene |
| 1240725 9.5 | 805631 6.1 | 647029 4.9 | 81013 0.6 | 131150 1.0 | (Z)-3-Hexenol |
| 92179 ∞ | 88041 ∞ | 77512 ∞ | 66032 ∞ | N.D. - | (Z)-Linalool oxide |
| 125566 ∞ | N.D. - | N.D. - | N.D. - | N.D. - | (E)-Linalool oxide |
| 1110157 15.1 | 948648 12.9 | 809582 11.0 | 935422 12.7 | 73453 1.0 | Benzaldehyde |
| 3273642 72.9 | 586348 13.1 | 120651 2.7 | 505246 11.3 | 44905 1.0 | Linalool |
| 419112 12.5 | 306721 9.2 | 36569 1.1 | 215301 6.4 | 33502 1.0 | Geranial |
| 150382 6.2 | 243367 10.1 | 46020 1.9 | 220124 9.1 | 24142 1.0 | Methyl salicylate |
| 474802 8.0 | 611881 10.3 | 73458 1.2 | 574231 9.7 | 59488 1.0 | Geraniol |
| 433322 ∞ | 334208 ∞ | 214609 ∞ | 328145 ∞ | N.D. - | Benzyl alcohol |

Regarding numerical values in the table, that on the upper stage shows peak area and that on the lower stage shows ratio against no addition. N.D. represents the detection limit or less.

As shown in Table 2, also in instant green tea extraction liquid, the amounts of many aroma components increased by the addition of a diglycosidase. Therefore, an enzyme treatment with a diglycosidase is effective also on instant green tea extraction liquid, indicating namely that, by the addition of a diglycosidase, a flavor can be effectively improved. Here, it is indicated that instant green tea such as the tea bag used in the present example and the like is poor in aroma, in general. Therefore, the above-mentioned flavor improvement effect is extremely effective on instant green tea, and by reinforcing a main aroma of green tea in instant green tea, its flavor can be improved, resultantly, aroma quality near that of tea leaf products can be obtained. (2-2) Sensory evaluation by panelist

### (1) Preparation of green tea extraction liquid

4 g of tea leaves (Ooi ocha (trade name: kettle decocted green tea, manufactured by Ito-En Ltd.) was placed in a teapot, and about 400 mL of hot water (about 90°C) was poured thereon. Percolation of about 40 seconds (while rotating a few times) gave green tea leaf extraction liquid.

On the other hand, 1 pack (2 g) of decocted tea bag (manufactured by Japanese Tea Sales Ltd.) was placed in a vessel and about 200 mL of hot water (about 90°C) was poured thereon. Percolation of about 40 seconds (while rotating a few times) gave instant green tea extraction liquid.

### (2) Enzyme treatment of green tea extraction liquid (green tea leaf extraction liquid, instant green tea extraction liquid)

To 20 mL of green tea leaf extraction liquid was added the diglycosidase prepared in Example 1 and an enzyme treatment was conducted. Treatment conditions included 55°C and 3 hours. A group of addition of a crude diglycosidase and a group of addition of a purified diglycosidase were provided. The crude diglycosidase group had two divisions depending on difference in addition amount (addition amount: 5.2 or 52 units) and the purified diglycosidase group had one division (addition amount: 52 units). A group of no addition of diglycosidase (no addition) was used as a control.

### (3) Sensory evaluation

Using each green tea extraction liquid after enzyme treatment, sensory tests (taste, aroma) were conducted by 5 panelists. A 5 point evaluation method was adopted (evaluation point 5: strong, evaluation point 4: relatively strong, evaluation point 3: normal, evaluation point 2: relatively weak, evaluation point 1: weak). The results of the sensory test are shown in the following Tables 3 to 10.

**(Table 3)**

| sensory test of green tea leaf extraction liquid subjected to enzyme treatment | | | | | | |
|---|---|---|---|---|---|---|
| | no addition of enzyme | | | | | |
| panelist | taste | | | aroma | | total evaluation |
| | freshness | bitterness | astringency | sweet aroma | fresh aroma | |
| panelist A | 1.0 | 1.0 | 1.0 | 1.0 | 2.0 | 2 |
| panelist B | 2.0 | 1.0 | 1.0 | 1.0 | 1.0 | 3 |
| panelist C | 1.0 | 1.0 | 2.0 | 1.0 | 3.0 | 2 |
| panelist D | 1.0 | 2.0 | 2.0 | 1.0 | 2.0 | 1 |
| panelist E | 2.0 | 1.0 | 1.0 | 1.0 | 2.0 | 2 |
| average point | 1.4 | 1.2 | 1.4 | 1.0 | 2.0 | 2.0 |

**(Table 4)**

| crude diglycosidase (5.2 units) | | | | | | |
|---|---|---|---|---|---|---|
| panelist | taste | | | aroma | | total evaluation |
| | freshness | bitterness | astringency | sweet aroma | fresh aroma | |
| panelist A | 4.0 | 2.0 | 2.0 | 4.0 | 3.0 | 3 |
| panelist B | 3.0 | 2.0 | 1.0 | 3.0 | 3.0 | 3 |
| panelist C | 3.0 | 3.0 | 1.0 | 3.0 | 3.0 | 2 |
| panelist D | 4.0 | 2.0 | 2.0 | 4.0 | 2.0 | 3 |
| panelist E | 2.0 | 2.0 | 1.0 | 2.0 | 3.0 | 4 |
| average point | 3.2 | 2.2 | 1.4 | 3.2 | 2.8 | 3.0 |

**(Table 5)**

| crude diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 4.0 | 2.0 | 2.0 | 5.0 | 3.0 | 5 |
| panelist B | 5.0 | 2.0 | 2.0 | 3.0 | 4.0 | 4 |
| panelist C | 5.0 | 2.0 | 1.0 | 5.0 | 4.0 | 5 |
| panelist D | 4.0 | 3.0 | 2.0 | 4.0 | 2.0 | 3 |
| panelist E | 3.0 | 3.0 | 2.0 | 3.0 | 3.0 | 5 |
| average point | 4.2 | 2.4 | 1.8 | 4.0 | 3.2 | 4.4 |

**(Table 6)**

| | purified diglycosidase (52 units) | | | | | |
|---|---|---|---|---|---|---|
| panelist | taste | | | aroma | | total evaluation |
| | freshness | bitterness | astringency | sweet aroma | fresh aroma | |
| panelist A | 4.0 | 3.0 | 1.0 | 4.0 | 3.0 | 4 |
| panelist B | 4.0 | 2.0 | 2.0 | 4.0 | 3.0 | 4 |
| panelist C | 5.0 | 2.0 | 1.0 | 4.0 | 3.0 | 4 |
| panelist D | 4.0 | 2.0 | 2.0 | 3.0 | 3.0 | 4 |
| panelist E | 3.0 | 3.0 | 2.0 | 4.0 | 3.0 | 4 |
| average point | 4.0 | 2.4 | 1.6 | 3.8 | 3.0 | 4.0 |

As shown in the above-mentioned tables, taste and aroma are reinforced by the treatment with a diglycosidase. Particularly, it can be confirmed that fresh feeling (throat feeling), sweet aroma, fresh aroma and the like were effectively reinforced. It is believed that aroma components (Linalool, Benzyl alcohol and the like) of which increase has been confirmed by the above-mentioned instrumental analysis (analysis by GC/MS) relates significantly to reinforcement of flower-like sweet aroma and reinforcement of fresh aroma relates to increase of (Z) -3-Hexenol. It is shown that fresh feeling (throat feeling) is improved significantly as described above, though bitterness and astringency are increases slightly.

**(Table 7)**

| results of sensory evaluation of instant green tea extraction liquid subjected to enzyme treatment | | | | | | |
|---|---|---|---|---|---|---|
| | no addition of enzyme | | | | | |
| panelist | taste | | | aroma | | total evaluation |
| | freshness | bitterness | astringency | sweet aroma | fresh aroma | |
| panelist A | 1.0 | 1.0 | 2.0 | 1.0 | 2.0 | 1 |
| panelist B | 1.0 | 1.0 | 1.0 | 1.0 | 1.0 | 2 |
| panelist C | 1.0 | 1.0 | 2.0 | 1.0 | 1.0 | 2 |
| panelist D | 1.0 | 1.0 | 1.0 | 1.0 | 2.0 | 1 |
| panelist E | 2.0 | 1.0 | 1.0 | 2.0 | 1.0 | 1 |
| average point | 1.2 | 1.0 | 1.4 | 1.2 | 1.4 | 1.4 |

**(Table 8)**

| | crude diglycosidase (5.2 units) | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 2.0 | 2.0 | 2.0 | 2 |
| panelist B | 1.0 | 3.0 | 1.0 | 3.0 | 1.0 | 3 |
| panelist C | 2.0 | 2.0 | 2.0 | 3.0 | 3.0 | 3 |
| panelist D | 3.0 | 1.0 | 2.0 | 4.0 | 2.0 | 3 |
| panelist E | 2.0 | 2.0 | 1.0 | 2.0 | 3.0 | 2 |
| average point | 2.0 | 2.0 | 1.6 | 2.8 | 2.2 | 2.6 |

**(Table 9)**

| | crude diglycosidase (52 units) | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 2.0 | 3.0 | 3.0 | 4 |
| panelist B | 2.0 | 3.0 | 1.0 | 3.0 | 3.0 | 4 |
| panelist C | 3.0 | 2.0 | 2.0 | 4.0 | 4.0 | 4 |
| panelist D | 4.0 | 2.0 | 2.0 | 5.0 | 4.0 | 4 |
| panelist E | 3.0 | 3.0 | 2.0 | 4.0 | 4.0 | 5 |
| average point | 2.8 | 2.4 | 1.8 | 3.8 | 3.6 | 4.2 |

**(Table 10)**

| | purified diglycosidase (52 units) | | | | | |
|---|---|---|---|---|---|---|
| panelist | taste | | | aroma | | total evaluation |
| | freshness | bitterness | astringency | sweet aroma | fresh aroma | |
| panelist A | 2.0 | 3.0 | 2.0 | 3.0 | 4.0 | 4 |
| panelist B | 2.0 | 3.0 | 1.0 | 4.0 | 3.0 | 4 |
| panelist C | 3.0 | 2.0 | 2.0 | 4.0 | 4.0 | 3 |
| panelist D | 3.0 | 2.0 | 1.0 | 4.0 | 3.0 | 4 |
| panelist E | 2.0 | 2.0 | 2.0 | 3.0 | 4.0 | 4 |
| average point | 2.4 | 2.4 | 1.6 | 3.6 | 3.6 | 3.8 |

As shown in the above-mentioned tables, increase of flower-like sweet aroma and fresh aroma was confirmed by a diglycosidase treatment likewise also in instant green tea extraction liquid. Therefore, reinforcement of aroma and improvement in flavor of instant products of which aroma has been judged poor to date are believed possible. Regarding taste, bitterness and astringency increase, however, since fresh feeling (throat feeling) also increases simultaneously, it is believed that total balance of taste does not change significantly, and taste quality scarcely deteriorates.

### [Example 3] Evaluation of effect of improving flavor on Oolong tea

### (3-1) Evaluation by instrumental analysis

### (1) Preparation of Oolong tea extraction liquid

To 2 g of tea leaves (Chinese famous tea Oolong tea (trade name: manufactured by Japanese Tea Sales Ltd.) was added 50 mL of boiling water and boiled for 1 minute. This was filtrated (No. 2 filter paper) to remove insoluble components and the resulted filtrate was used as Oolong tea leaf extraction liquid.

On the other hand, to 1 pack (2 g) of Oolong tea bag (Chinese famous tea Oolong tea, manufactured by Japanese Tea Sales Ltd.) was added 50 mL of boiling water and boiled for 30 seconds. This was filtrated (No. 2 filter paper) to remove insoluble components, and the resulted filtrate was used as instant Oolong tea extraction liquid.

### (2) Enzyme treatment of Oolong tea extraction liquid (Oolong tea leaf extraction liquid, instant Oolong tea extraction liquid)

Oolong tea extraction liquid was subjected to an enzyme treatment in the same manner as in the above-mentioned (2-1)(2). The crude diglycosidase group had four divisions depending on difference in addition amount (addition amount: 5.2 to 520 units) and the purified diglycosidase group had one division (addition amount: 52 units). A group of no addition of diglycosidase (no addition) was used as a control.

### (3) Measurement and evaluation of aroma component

After an enzyme treatment, identification of an aroma component in each extraction liquid was conducted by gas chromatography/mass spectrometry (GC/MS, product number "HP6890 GC/HP5973MSD", manufactured Agilent Technologies). The measurement results are shown in the following Tables 11 and 12.

**(Table 11)**

| Oolong tea leaf extraction liquid | | | | | | |
|---|---|---|---|---|---|---|
| | diglycosidase activity (unit) | | | | | |
| | crude enzyme | | purified enzyme | | no addition | compound name |
| 520 | 260 | 52 | 5.2 | 52 | | |
| 125167 ∞ | 66479 ∞ | 75329 ∞ | 40355 ∞ | 46347 ∞ | N.D. - | 1-Hexanol |
| 1006705 6.2 | 1007092 6.2 | 884746 5.4 | 736947 4.5 | 55704 0.3 | 162867 1.0 | (Z)-3-Hexenol |
| 125428 4.0 | 124821 4.0 | 65263 2.1 | 62901 2.0 | 38574 1.2 | 31079 1.0 | (Z)-Linalool oxide |
| 116712 ∞ | 114358 ∞ | 132593 ∞ | 60857 ∞ | N.D. - | N.D. - | (E)-Linalool oxide |
| 1051770 3.2 | 915185 2.8 | 855279 2.6 | 709228 2.1 | 856045 2.6 | 330603 1.0 | Benzaldehyde |
| 1431863 6.2 | 1437442 6.2 | 842582 3.6 | 407919 1.8 | 445794 1.9 | 232822 1.0 | Linalool |
| 189137 ∞ | 140649 ∞ | 119751 ∞ | N.D. - | 605378 ∞ | N.D. - | Geranial |
| 270514 ∞ | 229313 ∞ | 104672 ∞ | 76108 ∞ | 599560 ∞ | N.D. - | Geraniol |
| 86204 1.6 | 64863 1.2 | 105956 2.0 | 71932 1.3 | 327410 6.1 | 53322 1.0 | Methyl salicylate |
| 384199 ∞ | 418023 ∞ | 237450 ∞ | 150958 ∞ | 228162 ∞ | N.D. - | Benzyl alcohol |

Regarding numerical values in the table, that on the upper stage shows peak area and that on the lower stage shows ratio against no addition. N.D. represents the detection limit or less.

As shown in Table 11, the same aroma components as observed in the case of the above-mentioned green tea extraction liquid increase by addition of a diglycosidase though the increase proportion of each aroma component differs. Therefore, it is found that by addition of a diglycosidase, aroma components in Oolong tea extraction liquid can be extracted, to improve flavor. In the case of treatment with a crude diglycosidase containing a diglycosidase of the same activity as in the case of treatment with a purified diglycosidase, the increase amount of each aroma component is approximately the same, showing that the diglycosidase plays a central role in the increase action of an aroma component. Since the amounts of increase of aroma components differ depending on the addition amount of a diglycosidase (crude diglycosidase group), the amount of an each aroma component can be changed by controlling the addition amount of a diglycosidase, resultantly, a Oolong tea beverage having various aroma balance can be produced.

**(Table 12)**

| instant Oolong tea extraction liquid | | | | | |
|---|---|---|---|---|---|
| diglycosidase activity (unit) | | | | | |
| crude enzyme | | | purified enzyme | no addition | compound name |
| 260 | 52 | 5.2 | 52 | | |
| 1304285 6.3 | 766467 3.7 | 600471 2.9 | 449350 2.2 | 206098 1.0 | (Z)-3-Hexenol |
| 211086 ∞ | 131708 ∞ | 52904 ∞ | 60511 ∞ | N.D. - | (Z)-Linalool oxide |
| 137521 6.2 | 67305 3.0 | 17642 0.8 | 28843 1.3 | 22151 1.0 | (E)-Linalool oxide |
| 1214152 3.7 | 991581 3.0 | 832062 2.5 | 957736 2.9 | 329105 1.0 | Benzaldehyde |
| 617863 5.2 | 365279 3.1 | 229910 1.9 | 194358 1.6 | 118184 1.0 | Linalool |
| 249488 ∞ | 81070 ∞ | N.D. - | 77360 ∞ | N.D. - | Terpineol |
| 418448 ∞ | 197851 ∞ | N.D. - | 74225 ∞ | N.D. - | Geranial |
| 119403 ∞ | 87782 ∞ | N.D. - | 66803 ∞ | N.D. - | delta-Cadinene |
| 177674 ∞ | 143386 ∞ | 53776 ∞ | 95048 ∞ | N.D. - | Methyl salicylate |
| 284081 3.4 | 509534 6.1 | 281640 3.4 | 158641 1.9 | 83073 1.0 | Geraniol |
| 297712 ∞ | 362078 ∞ | 166192 ∞ | 338274 ∞ | N.D. - | Benzyl alcohol |

Regarding numerical values in the table, that on the upper stage shows peak area and that on the lower stage shows ratio against no addition. N.D. represents the detection limit or less.

As shown in Table 12, also in instant Oolong tea extraction liquid, components such as Linalool, Geraniol, Benzyl alcohol and the like were reinforced by the addition of a diglycosidase. These components are aroma components particularly poor in instant Oolong tea, indicating that such change contributes significantly to improvement of aroma. By this fact, it is believed that an enzyme treatment with a diglycosidase is extremely effective as a means of improving the flavor of instant Oolong tea extraction liquid. (3-2) Sensory evaluation by panelist

### (1) Preparation of Oolong tea extraction liquid

4 g of tea leaves (Chinese famous tea Oolong tea (trade name: manufactured by Japanese Tea Sales Ltd.)) was placed in a teapot, and about 400 mL of hot water (about 90° C) was poured thereon. Percolation of about 1 minute (while rotating a few times) gave Oolong tea leaf extraction liquid.

On the other hand, 1 pack (2 g) of Oolong tea bag (Chinese famous tea Oolong tea, manufactured by Japanese Tea Sales Ltd.) was placed in a vessel and about 200 mL of hot water (about 90°C) was poured thereon. Percolation of about 40 seconds (while rotating a few times) gave instant Oolong tea extraction liquid.

### (2) Enzyme treatment of Oolong tea extraction liquid (Oolong tea leaf extraction liquid, instant Oolong tea extraction liquid)

Oolong tea extraction liquid was subjected to an enzyme treatment with a diglycosidase in the same manner as in the above-mentioned (2-2)(2). Two divisions of the crude diglycosidase group depending on difference in addition amount (addition amount: 5.2 or 52 units) and one division of the purified diglycosidase group (addition amount: 52 units) were prepared. A group of no addition of diglycosidase (no addition) was used as a control.

### (3) Sensory evaluation

Using each Oolong tea extraction liquid after enzyme treatment, sensory tests (taste, aroma) were conducted by 5 panelists. A 5 point evaluation method was adopted (evaluation point 5: strong, evaluation point 4: relatively strong, evaluation point 3: normal, evaluation point 2: relatively weak, evaluation point 1: weak). The results of the sensory test are shown in the following Tables 13 to 20.

**(Table 13)**

| sensory evaluation of Oolong tea leaf extraction liquid subjected to enzyme treatment | | | | | | |
|---|---|---|---|---|---|---|
| | no addition of enzyme | | | | | |
| panelist | taste | | | aroma | | total evaluation |
| | freshness | bitterness | astringency | sweet aroma | fresh aroma | |
| panelist A | 1.0 | 1.0 | 2.0 | 1.0 | 3.0 | 2 |
| panelist B | 2.0 | 1.0 | 1.0 | 2.0 | 1.0 | 3 |
| panelist C | 2.0 | 1.0 | 2.0 | 2.0 | 2.0 | 3 |
| panelist D | 2.0 | 2.0 | 2.0 | 1.0 | 1.0 | 2 |
| panelist E | 1.0 | 1.0 | 1.0 | 1.0 | 2.0 | 2 |
| average point | 1.6 | 1.2 | 1.6 | 1.4 | 1.8 | 2.8 |

**(Table 14)**

| crude diglycosidase (5.2 units) | | | | | | |
|---|---|---|---|---|---|---|
| panelist | taste | | | aroma | | total evaluation |
| | freshness | bitterness | astringency | sweet aroma | fresh aroma | |
| panelist A | 3.0 | 2.0 | 1.0 | 4.0 | 4.0 | 4 |
| panelist B | 2.0 | 1.0 | 2.0 | 3.0 | 3.0 | 4 |
| panelist C | 2.0 | 3.0 | 3.0 | 5.0 | 2.0 | 3 |
| panelist D | 3.0 | 2.0 | 2.0 | 4.0 | 3.0 | 4 |
| panelist E | 3.0 | 2.0 | 2.0 | 4.0 | 3.0 | 3 |
| average point | 2.6 | 2.0 | 2.0 | 4.0 | 3.0 | 3.6 |

**(Table 15)**

| crude diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 3.0 | 1.0 | 5.0 | 4.0 | 4 |
| panelist B | 3.0 | 2.0 | 2.0 | 4.0 | 4.0 | 5 |
| panelist C | 2.0 | 2.0 | 2.0 | 5.0 | 3.0 | 5 |
| panelist D | 3.0 | 3.0 | 3.0 | 5.0 | 5.0 | 4 |
| panelist E | 3.0 | 2.0 | 2.0 | 5.0 | 4.0 | 4 |
| average point | 2.6 | 2.4 | 2.0 | 4.8 | 4.0 | 4.4 |

**(Table 16)**

| purified diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 3.0 | 2.0 | 1.0 | 5.0 | 5.0 | 4 |
| panelist B | 3.0 | 2.0 | 2.0 | 4.0 | 4.0 | 4 |
| panelist C | 2.0 | 2.0 | 2.0 | 5.0 | 3.0 | 3 |
| panelist D | 2.0 | 3.0 | 2.0 | 4.0 | 4.0 | 4 |
| panelist E | 3.0 | 2.0 | 2.0 | 5.0 | 4.0 | 5 |
| average point | 2.6 | 2.2 | 1.8 | 4.6 | 4.0 | 4.0 |

As shown in the above-mentioned tables, taste and aroma are reinforced by the treatment with a diglycosidase. In the group using a purified diglycosidase, evaluation on astringency scarcely changes, indicating that a diglycosidase itself scarcely relates to these flavors. It also became apparent that a black tea-like aroma is reinforced by a diglycosidase treatment.

**(Table 17)**

| sensory evaluation of instant Oolong tea extraction liquid subjected to enzyme treatment | | | | | | |
|---|---|---|---|---|---|---|
| no addition of enzyme | | | | | | |
| panelist | taste | | | aroma | | total evaluation |
| | freshness | bitterness | astringency | sweet aroma | fresh aroma | |
| panelist A | 1.0 | 1.0 | 2.0 | 1.0 | 2.0 | 1 |
| panelist B | 2.0 | 2.0 | 2.0 | 1.0 | 2.0 | 2 |
| panelist C | 1.0 | 1.0 | 1.0 | 1.0 | 2.0 | 2 |
| panelist D | 2.0 | 2.0 | 1.0 | 2.0 | 2.0 | 2 |
| panelist E | 1.0 | 1.0 | 1.0 | 1.0 | 1.0 | 1 |
| average point | 1.4 | 1.4 | 1.4 | 1.2 | 1.8 | 1.6 |

**(Table 18)**

| crude diglycosidase (5.2 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 2.0 | 3.0 | 2.0 | 2 |
| panelist B | 2.0 | 1.0 | 3.0 | 2.0 | 1.0 | 2 |
| panelist C | 1.0 | 3.0 | 1.0 | 3.0 | 3.0 | 3 |
| panelist D | 2.0 | 1.0 | 1.0 | 4.0 | 2.0 | 3 |
| panelist E | 2.0 | 2.0 | 2.0 | 2.0 | 2.0 | 2 |
| average point | 1.8 | 1.8 | 1.8 | 2.8 | 2.0 | 2.4 |

**(Table 19)**

| crude diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 3.0 | 2.0 | 2.0 | 4.0 | 2.0 | 3 |
| panelist B | 2.0 | 2.0 | 2.0 | 3.0 | 1.0 | 4 |
| panelist C | 1.0 | 3.0 | 2.0 | 4.0 | 2.0 | 4 |
| panelist D | 3.0 | 2.0 | 3.0 | 4.0 | 3.0 | 5 |
| panelist E | 3.0 | 2.0 | 1.0 | 5.0 | 3.0 | 4 |
| average point | 2.4 | 2.2 | 2.0 | 4.0 | 2.2 | 4.0 |

**(Table 20)**

| purified diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 2.0 | 3.0 | 2.0 | 4 |
| panelist B | 2.0 | 2.0 | 1.0 | 4.0 | 2.0 | 4 |
| panelist C | 2.0 | 2.0 | 2.0 | 4.0 | 2.0 | 3 |
| panelist D | 3.0 | 2.0 | 2.0 | 3.0 | 2.0 | 3 |
| panelist E | 2.0 | 2.0 | 2.0 | 4.0 | 2.0 | 4 |
| average point | 2.2 | 2.0 | 1.8 | 3.6 | 2.0 | 3.6 |

As shown in the above-mentioned tables, increase particularly of sweet aroma was confirmed by a diglycosidase treatment likewise also in instant Oolong tea extraction liquid. Therefore, reinforcement of aroma and improvement in flavor of instant products of which aroma has been judged poor to date are believed possible.

### [Example 4] Evaluation of effect of improving flavor on black tea

### (4-1) Evaluation by instrumental analysis

### (1) Preparation of black tea extraction liquid

To 2 g of tea leaves (Brookbond Hotel & Restaurant blend Darjeeling black tea (trade name: manufactured by BBL Japan K.K.)) was added 50 mL of boiling water and boiled for 1 minute. This was filtrated (No. 2 filter paper) to remove insoluble components, and the resulted filtrate was used as black tea leaf extraction liquid.

On the other hand, to 1 pack (2 g) of black tea bag (Darjeeling black tea (trade name, manufactured by IKE K.K.) was added 50 mL of boiling water and boiled for 45 seconds. This was filtrated (No. 2 filter paper) to remove insoluble components, and the resulted filtrate was used as instant black tea extraction liquid.

### (2) Enzyme treatment of black tea extraction liquid (black tea leaf extraction liquid, instant black tea extraction liquid)

Black tea extraction liquid was subjected to an enzyme treatment in the same manner as in the above-mentioned (2-1) (2). Four divisions of the crude diglycosidase group depending on difference in addition amount (addition amount: 5.2 to 520 units) and one division of the purified diglycosidase group (addition amount: 52 units) were prepared. A group of no addition of diglycosidase (no addition) was used as a control.

### (3) Measurement and evaluation of aroma component

After an enzyme treatment, identification of an aroma component in each extraction liquid was conducted by gas chromatography/mass spectrometry (GC/MS, product number "HP6890 GC/HP5973MSD", manufactured Agilent Technologies). The measurement results are shown in the following Tables 21 and 22.

**(Table 21)**

| black tea extraction liquid | | | | | | |
|---|---|---|---|---|---|---|
| diglycosidase activity (unit) | | | | | | |
| crude enzyme | | | | purified enzyme | no addition | compound name |
| 520 | 260 | 52 | 5.2 | 52 | | |
| 396067 ∞ | 182776 ∞ | 169409 ∞ | N.D. - | 154420 ∞ | N.D. - | 1-Hexanol |
| 1560554 3.3 | 1059009 2.2 | 840112 1.8 | 831310 1.8 | 1403752 3.0 | 474847 1.0 | (Z)-3-Hexenol |
| 1562811 2.8 | 1386873 2.5 | 1017438 1.8 | 815849 1.5 | 1008654 1.8 | 556643 1.0 | Benzaldehyde |
| 2610268 1.5 | 2648097 1.6 | 1667423 1.0 | 1395337 0.8 | 1984231 1.2 | 1690567 1.0 | Linalool |
| 94750 ∞ | N.D. - | N.D. - | N.D. - | N.D. - | N.D. - | Hotrienol |
| 180499 ∞ | 110123 ∞ | N.D. - | N.D. - | N.D. - | N.D. - | beta-Sesquiphellandrene |
| 412753 ∞ | 295552 ∞ | 50057 ∞ | N.D. - | 46257 ∞ | N.D. - | Geranial |
| 187738 2.1 | 222627 2.5 | 144507 1.6 | 80570 0.9 | 90124 1.0 | 89334 1.0 | Methyl salicylate |
| 668273 8.1 | 587961 7.1 | 428682 5.2 | 159633 1.9 | 263321 3.2 | 82720 1.0 | Geraniol |

Regarding numerical values in the table, that on the upper stage shows peak area and that on the lower stage shows ratio against no addition. N.D. represents the detection limit or less.

As shown in Table 21, main aroma components of black tea, geraniol, linalool, (Z)-3-Hexenol, 1-hexanol and the like increased by addition of a diglycosidase. Therefore, it is possible to extract main aroma components of black tea by addition of a diglycosidase and to produce a black tea beverage more rich in flavor.

The process of producing black tea (tea leaf) is characterized in that black tea is produced without deactivating an intrinsic enzyme of a tea leaf. Therefore, it has been believed that β-primeverosidase which is one of endogenous enzymes can act sufficiently in a process of producing a tea leaf, a glycoside as an aroma precursor present in a tea leaf is completely hydrolyzed and is no longer present in a tea leaf. However, from the above-mentioned results, it became apparent that part of glycoside remains without receiving hydrolysis by ß-primeverosidase of a tea leaf itself. Further, a possibility has been shown that this remaining glycoside is hydrolyzed by a diglycosidase, to improve an aroma.

In the case of treatment with a purified diglycosidase and in the case of treatment with a crude diglycosidase containing a diglycosidase of the same activity, the increased amount of each aroma component is approximately the same, showing that the diglycosidase plays a central role in the increase action of an aroma component. Since the amount of increase of an aroma component differs depending on the addition amount of a diglycosidase (crude diglycosidase group), the amount of an each aroma component can be changed by controlling the addition amount of a diglycosidase, indicating resultantly that a black tea beverage having various aroma balance can be produced.

**(Table 22)**

| instant black tea extraction liquid | | | | | |
|---|---|---|---|---|---|
| diglycosidase activity (unit) | | | | | |
| crude enzyme | | | purified enzyme | no addition | compound name |
| 260 | 52 | 5.2 | 52 | | |
| 1147607 2.6 | 924520 2.1 | 793825 1.8 | 915620 2.1 | 442849 1.0 | Benzaldehyde |
| 2480792 1.5 | 2076575 1.3 | 1634839 1.0 | 2102747 1.3 | 1641185 1.0 | Linalool |
| 149607 2.1 | 82382 1.1 | 74805 1.0 | 71852 1.0 | 72487 1.0 | Terpineol |
| 226966 3.7 | 68515 1.1 | 74343 1.2 | 64037 1.1 | 60969 1.0 | Geranial |
| 167332 5.6 | 121086 4.0 | 37322 1.2 | 31058 1.0 | 29973 1.0 | Methyl salicylate |
| 431856 6.6 | 372951 5.7 | 189388 2.9 | 218354 3.3 | 65909 1.0 | Geraniol |
| 359911 ∞ | 282244 ∞ | 192181 ∞ | 158801 ∞ | N.D. - | Benzyl alcohol |

Regarding numerical values in the table, that on the upper stage shows peak area and that on the lower stage shows ratio against no addition. N.D. represents the detection limit or less.

As shown in Table 22, also in instant black tea extraction liquid, some main aroma components of black tea were reinforced. By this, an enzyme treatment with a diglycosidase is believed effective as a means of improving the flavor of instant black tea extraction liquid.

### (4-2) Sensory evaluation by panelist

### (1) Preparation of black tea extraction liquid

To 8 g of tea leaves (Brookbond Hotel & Restaurant blend Darjeeling black tea (trade name: manufactured by BBL Japan K.K.) was placed in a tea pot and about 400 mL of boiling water (about 90° C) was poured thereon. Percolation of about 2 minutes (while rotating a few times) gave black tea leaf extraction liquid.

On the other hand, 1 pack (2 g) of black tea bag (Darjeeling black tea (trade name, manufactured by IKE K.K.)) was placed in a vessel, and about 150 mL of boiling water (about 90° C) was poured thereon. Percolation of about 1 minute (while rotating a few times) gave instant black tea leaf extraction liquid.

### (2) Enzyme treatment of black tea extraction liquid (black tea leaf extraction liquid, instant black tea extraction liquid)

Black tea extraction liquid was subjected to an enzyme treatment with a diglycosidase in the same manner as in the above-mentioned (2-2)(2). Two divisions of the crude diglycosidase group depending on difference in addition amount (addition amount: 5.2 or 52 units) and one division of the purified diglycosidase group (addition amount: 52 units) were prepared. A group of no addition of diglycosidase (no addition) was used as a control.

### (3) Sensory evaluation

Using each black tea extraction liquid after enzyme treatment, sensory tests (taste, aroma) were conducted by 5 panelists. A 5 point evaluation method was adopted (evaluation point 5: strong, evaluation point 4: relatively strong, evaluation point 3: normal, evaluation point 2: relatively weak, evaluation point 1: weak). The results of the sensory test are shown in the following Tables 23 to 30.

**(Table 23)**

| sensory evaluation of black tea extraction liquid subjected to enzyme treatment | | | | | | |
|---|---|---|---|---|---|---|
| no addition of enzyme | | | | | | |
| panelist | taste | | | aroma | | total evaluation |
| | freshness | bitterness | astringency | sweet aroma | fresh aroma | |
| panelist A | 1.0 | 2.0 | 3.0 | 3.0 | 2.0 | 2 |
| panelist B | 2.0 | 2.0 | 3.0 | 2.0 | 1.0 | 2 |
| panelist C | 2.0 | 1.0 | 2.0 | 2.0 | 1.0 | 1 |
| panelist D | 2.0 | 2.0 | 2.0 | 3.0 | 2.0 | 2 |
| panelist E | 2.0 | 1.0 | 2.0 | 2.0 | 2.0 | 1 |
| average point | 1.8 | 1.6 | 2.4 | 2.4 | 1.6 | 1.6 |

**(Table 24)**

| crude diglycosidase (5.2 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 3.0 | 3.0 | 2.0 | 3 |
| panelist B | 2.0 | 1.0 | 3.0 | 3.0 | 3.0 | 2 |
| panelist C | 2.0 | 2.0 | 3.0 | 3.0 | 2.0 | 2 |
| panelist D | 3.0 | 2.0 | 2.0 | 3.0 | 3.0 | 3 |
| panelist E | 2.0 | 1.0 | 2.0 | 2.0 | 3.0 | 3 |
| average point | 2.2 | 1.6 | 2.6 | 2.8 | 2.6 | 2.6 |

**(Table 25)**

| crude diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 3.0 | 4.0 | 2.0 | 4 |
| panelist B | 2.0 | 2.0 | 3.0 | 3.0 | 4.0 | 3 |
| panelist C | 2.0 | 2.0 | 3.0 | 3.0 | 3.0 | 4 |
| panelist D | 2.0 | 3.0 | 3.0 | 3.0 | 3.0 | 4 |
| panelist E | 3.0 | 2.0 | 2.0 | 2.0 | 4.0 | 3 |
| average point | 2.2 | 2.2 | 2.8 | 3.0 | 3.2 | 3.6 |

**(Table 26)**

| purified diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 3.0 | 3.0 | 4.0 | 3 |
| panelist B | 3.0 | 2.0 | 2.0 | 3.0 | 3.0 | 4 |
| panelist C | 2.0 | 2.0 | 3.0 | 3.0 | 3.0 | 3 |
| panelist D | 2.0 | 2.0 | 1.0 | 3.0 | 3.0 | 5 |
| panelist E | 3.0 | 1.0 | 2.0 | 2.0 | 3.0 | 3 |
| average point | 2.4 | 1.8 | 2.2 | 2.8 | 3.2 | 3.6 |

As shown in the above-mentioned tables, significant change in taste was not observed though there was slight change depending on the presence or absence of a diglycosidase treatment. On the other hand, regarding other aromas, particular reinforcement of fresh aroma is recognized. The reason for this may be hypothesized that increase of aroma components such as 1-hexanol, (Z)-3-hexenol, geraniol, linalool and the like confirmed in the above-mentioned instrumental analysis (GC/MS analysis) is correlated with this.

**(Table 27)**

| sensory evaluation of black tea extraction liquid subjected to enyme treatment | | | | | | |
|---|---|---|---|---|---|---|
| no addition of enzyme | | | | | | |
| panelist | taste | | | aroma | | total evaluation |
| | freshness | bitterness | astringency | sweet aroma | fresh aroma | |
| panelist A | 1.0 | 2.0 | 2.0 | 2.0 | 1.0 | 1 |
| panelist B | 2.0 | 2.0 | 2.0 | 1.0 | 1.0 | 2 |
| panelist C | 1.0 | 2.0 | 2.0 | 2.0 | 1.0 | 2 |
| panelist D | 1.0 | 1.0 | 3.0 | 1.0 | 2.0 | 3 |
| panelist E | 1.0 | 1.0 | 2.0 | 2.0 | 1.0 | 1 |
| average point | 1.2 | 1.6 | 2.2 | 1.6 | 1.2 | 1.8 |

**(Table 28)**

| crude diglycosidase (5.2 units) | | | | | | |
|---|---|---|---|---|---|---|
| panelist | taste | | | aroma | | total evaluation |
| | freshness | bitterness | astringency | sweet aroma | fresh aroma | |
| panelist A | 1.0 | 1.0 | 3.0 | 2.0 | 2.0 | 3 |
| panelist B | 2.0 | 2.0 | 2.0 | 2.0 | 2.0 | 3 |
| panelist C | 2.0 | 2.0 | 2.0 | 3.0 | 2.0 | 3 |
| panelist D | 1.0 | 2.0 | 3.0 | 2.0 | 3.0 | 3 |
| panelist E | 1.0 | 1.0 | 3.0 | 2.0 | 3.0 | 2 |
| average point | 1.4 | 1.6 | 2.6 | 2.2 | 2.4 | 2.8 |

**(Table 29)**

| crude diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 3.0 | 3.0 | 2.0 | 3 |
| panelist B | 1.0 | 2.0 | 2.0 | 2.0 | 3.0 | 4 |
| panelist C | 1.0 | 2.0 | 3.0 | 3.0 | 3.0 | 3 |
| panelist D | 1.0 | 3.0 | 3.0 | 3.0 | 3.0 | 4 |
| panelist E | 1.0 | 1.0 | 3.0 | 3.0 | 3.0 | 3 |
| average point | 1.2 | 2.0 | 2.8 | 2.8 | 2.8 | 3.4 |

**(Table 30)**

| purified diglycosidase (52 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 2.0 | 2.0 | 2.0 | 2.0 | 4 |
| panelist B | 2.0 | 2.0 | 2.0 | 2.0 | 3.0 | 3 |
| panelist C | 1.0 | 2.0 | 2.0 | 3.0 | 2.0 | 3 |
| panelist D | 1.0 | 2.0 | 2.0 | 3.0 | 3.0 | 3 |
| panelist E | 1.0 | 2.0 | 3.0 | 3.0 | 3.0 | 3 |
| average point | 1.4 | 2.0 | 2.2 | 2.6 | 2.6 | 3.2 |

As shown in the above-mentioned tables, increase of sweet aroma and fresh aroma was confirmed by a diglycosidase treatment likewise also in instant black tea extraction liquid.

Recently, consumption of tea bag black tea is increasing over the world. For tea bag, CTC black tea is used. Since CTC black tea is finely crushed before sufficient hydrolysis of an aroma precursor by endogenous enzymes, an oxidation reaction progresses quickly, the amount of an aroma alcohol is small, and (E)-2-hexenal is produced in large amount.

By a diglycosidase treatment, an alcohol-based aroma component liable to be lack in CTC black tea can be increased, indicating that an aroma like that of orthodox black tea can be obtained. By controlling the addition amount of a diglycosidase, the amount of such an aroma component can be regulated, therefore, it is believed that black tea beverages of various aroma strengths can be produced.

In the above-mentioned examples, extraction liquid of tea leaves (green tea, Oolong tea, black tea) was treated with a diglycosidase, and an effect of improving flavor in this case was investigated. Examples will be shown below in which a diglycosidase was allowed to act in a process of producing a tea leaf, and an effect of improving flavor was investigated.

### [Example 5] Investigation of improvement of flavor in process of producing green tea

### (5-1) Method of processing tea leaf and method of treating enzyme

Production of green tea (tea leaf for green tea beverage) was conducted by a series of processes of plucking, steaming, coarse kneading, rolling, intermediate kneading, fine kneading and drying. The processing conditions of these processes are as shown below. About 2kg of a raw material tea leaf was treated.
(1) Steaming: This is conducted for the purpose of deactivating an enzyme in a tea leaf and simultaneously, enhancing flexibility of a tea leaf, making rolling easy, and removing a raw order, and the like. The plucked tea leaf was carried into a steaming machine, then, steam was introduced into the steaming machine, and the tea leaf was treated at 95° C for 20 minutes under a condition of well contact of the tea leaf with steam.
(2) Coarse kneading: A tea leaf was stirred and rolled under press in hot air to make water content in each portion of the tea leaf uniform, and drying is conducted efficiently. The tea leaf was treated for 30 minutes while maintaining the temperature of the tea leaf at 34 to 36°C.
(3) Rolling (enzyme treatment): This is conducted to compensate kneading lack in rolling and to remove water content irregularity of a tea leaf. 10 minutes after initiation of rolling, water dissolved liquid of a diglycosidase was sprayed by a sprayer, further, rolling was conducted for 30 minutes. 2 lots (addition amount: 260 units and 5200 units) were produced using a crude diglycosidase and 1 lot (addition amount: 260 units) was produced using a fine diglycosidase. A lot produced without addition of an enzyme (no addition) was used as a control.
(4) Intermediate kneading: This is aprocess of kneadingwhile applying hot air like coarse kneading. The tea leaf was treated for 30 to 40 minutes while maintaining the temperature of the tea leaf at 34 to 36°C.
(5) Fine kneading: This is a process of making a straightly spreading form of decocted tea. Treatment was conducted for 50 minutes.
(6) Drying: A tea leaf is dried until the water content thereof becomes about 5% in a dry chamber through which hot air is passed. Treatment was conducted for 60 minutes.

To the tea leaf processing-treated as described above was added hot water to obtain green tea extraction liquid. The extraction liquid was subjected to instrumental analysis by GC/MS and sensory evaluation.

### (5-2) Evaluation by instrumental analysis

Using gas chromatography/mass spectrometry (GC/MS, product number "HP6890 GC/HP5973MSD", manufactured by Agilent Technologies), aroma components contained in extraction liquid of a tea leaf of each lot were identified, and the results are shown in Table 31.

**(Table 31)**

| GC/MS analysis result | | | | |
|---|---|---|---|---|
| diglycosidase activity (unit) | | | | |
| crude enzyme | | purified enzyme | no addition | compound name |
| 5200 | 260 | 260 | | |
| 210456 ∞ | 155023 ∞ | 60284 ∞ | N.D. - | Limonene |
| 867207 6.9 | 368792.0 2.9 | 330261 2.6 | 125465 1.0 | (E)-2-Hexenal |
| 1047265 3.4 | 620475 2.0 | 478525 1.6 | 305424 1.0 | 1-Hexanol |
| 4456735 9.7 | 2245750 4.9 | 1458325 3.2 | 458361 1.0 | (Z)-3-Hexenol |
| 302548 ∞ | 285463 ∞ | 175215 ∞ | N.D. - | (Z)-Linalool oxide |
| 421347 ∞ | 187823 ∞ | 182020 ∞ | N.D. - | (E)-Linalool oxide |
| 6937784 4.9 | 4858846 3.4 | 4426070 3.1 | 1425687 1.0 | Benzaldehyde |
| 11079542 17.8 | 7515056 12.1 | 5654178 9.1 | 622250 1.0 | Linalool |
| 223523 ∞ | 265916 ∞ | 126230 ∞ | N.D. - | Methyl salicylate |
| 665244 7.8 | 582054 6.8 | 165863 1.9 | 85485 1.0 | Geraniol |
| 1874544 ∞ | 1842154 ∞ | 1431607 ∞ | N.D. - | Benzyl alcohol |
| 580242 ∞ | 404989 ∞ | 388241 ∞ | ND. - | Phenyl ethyl alcohol |

### (5-3) Sensory evaluation by panelist

The results of the sensory tests are shown in Tables 32 to 35. Using five panelists, 5 point evaluation on taste and aroma was conducted (evaluation point 5: strong, evaluation point 4: relatively strong, evaluation point 3: normal, evaluation point 2: relatively weak, evaluation point 1: weak).

**(Table 32)**

| sensory evaluation of instant black tea extraction liquid subjected enzyme treatment | | | | | | | |
|---|---|---|---|---|---|---|---|
| no addition of enzyme | | | | | | | |
| panelist | taste | | | aroma | | | total evaluation |
| | freshness | bitterness | astringency | sweet aroma | coarse tea odor | fresh aroma | |
| panelist A | 1.0 | 1.0 | 3.0 | 1.0 | 4.0 | 2.0 | 2 |
| panelist B | 2.0 | 1.0 | 2.0 | 1.0 | 3.0 | 1.0 | 1 |
| panelist C | 2.0 | 1.0 | 1.0 | 1.0 | 4.0 | 1.0 | 1 |
| panelist D | 1.0 | 2.0 | 1.0 | 1.0 | 3.0 | 2.0 | 1 |
| panelist E | 2.0 | 1.0 | 1.0 | 1.0 | 3.0 | 2.0 | 1 |
| average point | 1.6 | 1.2 | 1.6 | 1.0 | 3.4 | 1.6 | 1.2 |

**(Table 33)**

| crude diglycosidase (260 units) | | | | | | | |
|---|---|---|---|---|---|---|---|
| panelist | taste | | | aroma | | | total evaluation |
| | freshness | bitterness | astringency | sweet aroma | coarse tea odor | fresh aroma | |
| panelist A | 4.0 | 2.0 | 2.0 | 4.0 | 1.0 | 3.0 | 4 |
| panelist B | 3.0 | 2.0 | 2.0 | 3.0 | 2.0 | 3.0 | 3 |
| panelist C | 4.0 | 3.0 | 2.0 | 3.0 | 1.0 | 4.0 | 4 |
| panelist D | 4.0 | 3.0 | 3.0 | 4.0 | 1.0 | 3.0 | 4 |
| panelist E | 3.0 | 2.0 | 1.0 | 3.0 | 2.0 | 3.0 | 5 |
| average point | 3.6 | 2.4 | 2.0 | 3.4 | 1.4 | 3.2 | 4.0 |

**(Table 34)**

| crude diglycosidase (5200 units) | | | | | | | |
|---|---|---|---|---|---|---|---|
| panelist | taste | | | aroma | | | total evaluation |
| | freshness | bitterness | astringency | sweet aroma | coarse tea odor | fresh aroma | |
| panelist A | 3.0 | 3.0 | 2.0 | 2.0 | 1.0 | 3.0 | 4 |
| panelist B | 4.0 | 2.0 | 3.0 | 3.0 | 1.0 | 4.0 | 3 |
| panelist C | 3.0 | 4.0 | 4.0 | 2.0 | 1.0 | 4.0 | 3 |
| panelist D | 3.0 | 3.0 | 3.0 | 2.0 | 1.0 | 3.0 | 4 |
| panelist E | 3.0 | 3.0 | 4.0 | 3.0 | 2.0 | 2.0 | 4 |
| average point | 3.2 | 3.0 | 3.2 | 2.4 | 1.2 | 3.2 | 3.6 |

**(Table 35)**

| purified diglycosidase (260 units) | | | | | | | |
|---|---|---|---|---|---|---|---|
| panelist | taste | | | aroma | | | total evaluation |
| | freshness | bitterness | astringency | sweet aroma | coarse tea odor | fresh aroma | |
| panelist A | 4.0 | 2.0 | 2.0 | 4.0 | 1.0 | 4.0 | 5 |
| panelist B | 5.0 | 3.0 | 2.0 | 4.0 | 1.0 | 3.0 | 4 |
| panelist C | 4.0 | 3.0 | 2.0 | 3.0 | 1.0 | 4.0 | 4 |
| panelist D | 4.0 | 2.0 | 2.0 | 4.0 | 1.0 | 3.0 | 4 |
| panelist E | 3.0 | 2.0 | 2.0 | 3.0 | 2.0 | 3.0 | 4 |
| average point | 4.0 | 2.4 | 2.0 | 3.6 | 1.2 | 3.4 | 4.2 |

The above-mentioned identification results of aroma components teach that aroma components are extracted by addition of a diglycosidase like in the case of Example 2 (in the case of enzyme treatment of tea leaf extraction liquid). From the sensory evaluation, it is shown that a sweet aroma and fresh aroma increased, and further, a coarse tea odor decreased. Thus, it was shown that production of a green tea beverage (or, tea leaf for green tea beverage capable of providing a green tea beverage having an improved flavor in extraction) having an improved flavor is possible by incorporating a process of diglycosidase treatment into production processes.

Here, Linalool, Geraniol, (Z)-3-Hexenol and the like are contained as aroma components in a fresh tea, have an excellent flavor. On the other hand, so-called coarse tea (Bancha) is obtained using second tea or third tea, the leaf thereof is hard, aromas as described above contained in fresh leaves are also poor, and it has specific uncomfortable odor called coarse tea odor. Therefore, it is possible to produce a tea leaf for tea beverage capable of providing a tea beverage of high quality, namely, having an improved flavor, by conducting an enzyme treatment process with a diglycosidase in a process of processing tea leaves of low grade. There is also a possibility of improving also an aroma of a tea leaf aged by left for a long period of time. Of course, also in the case of a tea rich in flavor such as a fresh tea, a diglycosidase treatment can be incorporated into production processes for further reinforcement of an aroma component and improvement ormodification of aroma balance.

### [Example 6] Investigation of improvement of flavor in process of producing Oolong tea

### (6-1) Method of processing tea leaf and method of treating enzyme

Production of Oolong tea (tea leaf for Oolong tea) was conducted by a series of processes of plucking, sun curingwithering, room withering, kettle roasting, rolling, and drying. The processing conditions of these processes are as shown below. About 2kg of a raw material tea leaf was treated.
(1) Sun curing withering: A tea leaf was treated for 30 minutes while controlling the temperature of the leaf at 30 to 40°C.
(2) Room withering: A leaf was stirred every 1 to 2 hours. This was repeated five times. The first stirring was conducted extremely slightly for about 1 minute, and 2 hours stand still after the fifth stirring, the next operation was initiated.
(3) Kettle roasting: A tea leaf was placed in a cylindrical leaf roasting machine and treated at 140 to 160° C for 2 to 3 minutes.
(4) Rolling (enzyme treatment) and drying: A tea leaf was rolled for 10 minutes, then, a loaf of the tea leaf was broken and applied to a drier. Directly after rolling, an aqueous solution of a diglycosidase was sprayed by a sprayer. 2 lots (addition amount: 520 units and 5200 units) were produced using a crude diglycosidase and 1 lot (addition amount: 520 units) was produced using a purified diglycosidase. A lot produced without addition of an enzyme (no addition) was used as a control.

To the tea leaf processing-treated as described above was added hot water to obtain Oolong tea extraction liquid. The extraction liquid was subjected to instrumental analysis by GC/MS and sensory evaluation.

### (6-2) Evaluation by instrumental analysis

Using gas chromatography/mass spectrometry (GC/MS, product number " HP6890 GC/HP5973MSD ", manufactured by Agilent Technologies), aroma components contained in extraction liquid of a tea leaf of each lot were identified, and the results are shown in Table 36.

**(Table 36)**

| GC/MS analysis result | | | | |
|---|---|---|---|---|
| no addition | crude diglycosidase (unit) | | purified enzyme (unit) | compound name |
| | 520 | 5200 | 520 | |
| 420847 1.0 | 696897 1.7 | 531740 1.3 | 576061 1.4 | Hexanal |
| 221358 1.0 | 282406 1.3 | 236735 1.1 | 311087 1.4 | 1-Hexanol |
| 274238 1.0 | 492148 1.8 | 455800 1.7 | 427895 1.6 | (Z)-3-Hexenol |
| 193291 1.0 | 266598 1.4 | 296172 1.5 | 296860 1.5 | 2-Hexenal |
| 462753 1.0 | 538533 1.2 | 467101 1.0 | 658283 1.4 | (Z)-Pentenol |
| N.D. - | 220887 ∞ | 260996 ∞ | 294126 ∞ | (Z)-Linalool oxide |
| 36146 1.0 | 60742 1.7 | 84451 2.3 | 46077 1.3 | (E)-Linalool oxide |
| 161568 1.0 | 226320 1.4 | 320156 2.0 | 286788 1.8 | Benzaldehyde |
| 74885 1.0 | 111798 1.5 | 134785 1.8 | 128883 1.7 | Linalool |
| 154024 1.0 | 457602 3.0 | 957502 6.2 | 399821 2.6 | Methyl salicylate |
| 438750 1.0 | 557602 1.3 | 678195 1.5 | 502593 1.1 | Geraniol |
| 649244 1.0 | 1620380 2.5 | 1810367 2.8 | 1375125 2.1 | Benzyl alcohol |
| 507163 1.0 | 941025 1.9 | 1428901 2.8 | 886723 1.7 | Phenyl ethyl alcohol |

### (6-3) Sensory evaluation by panelist

The results of the sensory tests are shown in Tables 37 to 40. Using five panelists, 5 point evaluation on taste and aroma was conducted (evaluation point 5: strong, evaluation point 4: relatively strong, evaluation point 3: normal, evaluation point 2: relatively weak, evaluation point 1: weak).

**(Table 37)**

| sensory evaluation of Oolong tea produced by adding enzyme during rolling process | | | | | | |
|---|---|---|---|---|---|---|
| no addition of enzyme | | | | | | |
| panelist | taste | | | aroma | | total evaluation |
| | freshness | bitterness | astringency | sweet aroma | fresh aroma | |
| panelist A | 1.0 | 2.0 | 2.0 | 3.0 | 2.0 | 1 |
| panelist B | 1.0 | 2.0 | 2.0 | 2.0 | 1.0 | 1 |
| panelist C | 1.0 | 3.0 | 2.0 | 1.0 | 1.0 | 2 |
| panelist D | 2.0 | 2.0 | 2.0 | 1.0 | 2.0 | 1 |
| panelist E | 2.0 | 2.0 | 3.0 | 2.0 | 1.0 | 3 |
| average point | 1.4 | 2.2 | 2.2 | 1.8 | 1.4 | 1.6 |

**(Table 38)**

| crude diglycosidase (520 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 3.0 | 3.0 | 4.0 | 3.0 | 3 |
| panelist B | 3.0 | 3.0 | 2.0 | 3.0 | 3.0 | 4 |
| panelist C | 3.0 | 3.0 | 3.0 | 4.0 | 4.0 | 4 |
| panelist D | 3.0 | 3.0 | 3.0 | 4.0 | 3.0 | 4 |
| panelist E | 3.0 | 2.0 | 2.0 | 4.0 | 3.0 | 3 |
| average point | 2.8 | 2.8 | 2.6 | 3.8 | 3.2 | 3.6 |

**(Table 39)**

| crude diglycosidase (5200 units) | | | | | | |
|---|---|---|---|---|---|---|
| panelist | taste | | | aroma | | total evaluation |
| | freshness | bitterness | astringency | sweet aroma | fresh aroma | |
| panelist A | 3.0 | 3.0 | 3.0 | 4.0 | 3.0 | 2 |
| panelist B | 3.0 | 4.0 | 3.0 | 5.0 | 4.0 | 3 |
| panelist C | 4.0 | 3.0 | 3.0 | 5.0 | 3.0 | 4 |
| panelist D | 3.0 | 4.0 | 3.0 | 4.0 | 3.0 | 3 |
| panelist E | 3.0 | 3.0 | 4.0 | 5.0 | 4.0 | 3 |
| average point | 3.2 | 3.4 | 3.2 | 4.6 | 3.4 | 3.0 |

**(Table 40)**

| purified diglycosidase (520 units) | | | | | | |
|---|---|---|---|---|---|---|
| panelist | taste | | | aroma | | total evaluation |
| | freshness | bitterness | astringency | sweet aroma | fresh aroma | |
| panelist A | 2.0 | 3.0 | 2.0 | 3.0 | 2.0 | 3 |
| panelist B | 3.0 | 2.0 | 3.0 | 4.0 | 4.0 | 4 |
| panelist C | 3.0 | 3.0 | 2.0 | 4.0 | 3.0 | 3 |
| panelist D | 3.0 | 2.0 | 3.0 | 4.0 | 4.0 | 4 |
| panelist E | 3.0 | 3.0 | 2.0 | 3.0 | 3.0 | 4 |
| average point | 2.8 | 2.6 | 2.4 | 3.6 | 3.2 | 3.6 |

The above-mentioned identification results of aroma components teach that aroma components are extracted by addition of a diglycosidase like in the case of Example 3 (in the case of enzyme treatment of tea leaf extraction liquid). From the sensory evaluation, it is shown that fresh feeling, sweet aroma and fresh aroma increased, and a flavor was improved. Thus, it was shown that production of a Oolong tea beverage (or, tea leaf for Oolong tea beverage capable of providing a Oolong tea beverage having an improved flavor in extraction) having an improved flavor is possible by incorporating a process of diglycosidase treatment into production processes.

### [Example 7] Investigation of improvement of flavor in process of producing black tea

### (7-1) Method of processing tea leaf and method of treating enzyme

Production of black tea (tea leaf for black tea) was conducted by a series of processes of plucking, withering, rolling, fermentation and drying. The processing conditions of these processes are as shown below. About 2 kg of a raw material tea leaf was treated.
(1) Withering: Plucked tea leaves (Benihomare species) were divided into each 500 g and treated at room temperature overnight (16 to 19 hours).
(2) Rolling (enzyme treatment): Withered tea leaves were subjected to a rolling treatment in a rolling machine (Date-mode tea production instrument). The rolling conditions are as described below. First, a process of grinding with a weight (5 minutes) and a process of stirring with a lid open (5 minutes) were conducted alternately each 4 times. With increase in the cycle number, the weigh was gradually increased (1200 g, 1800 g, 2400 g, 2700 g). At the third cycle, the diglycosidase prepared in Example 1 was added. Addition of the diglycosidase was conducted by spraying an enzyme solution (5 ml) so prepared that given unit amount is added, by a sprayer.

Subsequently, aprocess of grinding (10 minutes) and a process of stirring with a lid open were conducted each one cycle without changing the weight amount.

4 lots differing in the enzyme used and differing in the enzyme addition amount and a lot of no addition of enzyme (control), 5 lots in total were produced. The kinds and addition amounts of enzyme agents used in the lots are shown in Table 41.

**(Table 41)**

| enzyme addition amount per 500g of tea leaf and activity thereof | | | | | | |
|---|---|---|---|---|---|---|
| | enzyme preparation | addition amount (mg/5 mL) | activity (unit) | | | |
| | | | β-pri | β-Glc | β-Xyl | α-Rhm |
| ① | crude diglycosidase | 5.3 | 10 | 6 | 1 | 194 |
| ② | | 52.6 | 100 | 58 | 13 | 1937 |
| ③ | | 526.3 | 1000 | 579 | 132 | 19368 |
| ④ | purified diglycosidase | 6.8 | 100 | 13 | 7 | 17 |
| ⑤ | no addition (water added) | - | - | - | - | - |

To the tea leaf processing-treated as described above was added hot water to obtain black tea extraction liquid. The extraction liquid was subjected to instrumental analysis by GC/MS and sensory evaluation.

### (7-2) Evaluation by instrumental analysis

Using gas chromatography/mass spectrometry (GC/MS, product number " HP6890 GC/HP5973MSD ", manufactured by Agilent Technologies), aroma components contained in extraction liquid of a tea leaf of each lot were identified, and the results are shown in Table 42.

**(Table 42)**

| addition amount of diglycosidase (unit) | | | | | |
|---|---|---|---|---|---|
| | crude enzyme | | | purified enzyme | compound name |
| no addition | 10 | 100 | 1000 | 100 | |
| 1357103 1.0 | 1028298 0.8 | 1943140 1.4 | 2218127 1.6 | 1277388 0.9 | (E)-2-Hexenal |
| 91473 1.0 | 146357 1.6 | 182946 2.0 | 210388 2.3 | 164651 1.8 | (E)-Linalool oxide |
| 88737 1.0 | 106484 1.2 | 133106 1.5 | 133106 1.5 | 124232 1.4 | (Z)-Linalool oxide |
| 1111136 1.0 | 1444477 1.3 | 1777818 1.6 | 1914506 1.7 | 1333363 1.2 | Benzaldehyde |
| 612145 1.0 | 918218 1.5 | 1163076 1.9 | 1163076 1.9 | 1101861 1.8 | Linalool |
| ND - | 304744 ∞ | 439958 ∞ | 358174 ∞ | 204617 ∞ | Naphtalene. 1,2,3,4-tetrahydro-1,6-dimethyl-1-4-(1-methylethyl)- |
| ND - | 421365 ∞ | 260552 ∞ | 183489 ∞ | 131735 ∞ | alpha-Farnescone |
| 931276 1.0 | 1388005 1.5 | 2291391 2.5 | 1822184 2.0 | 1067267 1.1 | delta-Cadinene |
| 261155 1.0 | 325140 1.2 | 377667 1.4 | 225027 0.9 | 204646 0.8 | Methyl salicylate |
| 179967 1.0 | 251954 1.4 | 251954 1.4 | 323941 1.8 | 233957 1.3 | Benzyl alcohol |
| 174113 1.0 | 278581 1.6 | 400460 2.3 | 365637 2.1 | 348226 2.0 | Phenyl ethyl alcohol |

### (6-3) Sensory evaluation by panelist

The results of the sensory examination are shown in Tables 43 to 47. Using five panelists, 5 point evaluation on taste and aroma was conducted (evaluation point 5: strong, evaluation point 4: relatively strong, evaluation point 3: normal, evaluation point 2: relatively weak, evaluation point 1: weak).

**(Table 43)**

| sensory evaluation of black tea produced by adding enzyme during rolling process | | | | | | | |
|---|---|---|---|---|---|---|---|
| no addition of enzyme | | | | | | | |
| panelist | taste | | | aroma | | | total evaluation |
| | freshness | bitterness | astringency | sweet aroma | coarse tea odor | fresh aroma | |
| panelist A | 1.0 | 1.0 | 1.0 | 1.0 | 1.0 | 2.0 | 2 |
| panelist B | 1.0 | 2.0 | 2.0 | 1.0 | 1.0 | 3.0 | 1 |
| panelist C | 1.0 | 1.0 | 2.0 | 1.0 | 1.0 | 2.0 | 1 |
| panelist D | 2.0 | 1.0 | 1.0 | 1.0 | 1.0 | 1.0 | 1 |
| panelist E | 1.0 | 1.0 | 2.0 | 1.0 | 1.0 | 2.0 | 2 |
| average point | 1.2 | 1.2 | 1.6 | 1.0 | 1.0 | 2.0 | 1.4 |

**(Table 44)**

| crude diglycosidase (10 units) | | | | | | | |
|---|---|---|---|---|---|---|---|
| panelist | taste | | | aroma | | | total evaluation |
| | freshness | bitterness | astringency | sweet aroma | coarse tea odor | fresh aroma | |
| panelist A | 2.0 | 2.0 | 2.0 | 3.0 | 1.0 | 3.0 | 5 |
| panelist B | 2.0 | 2.0 | 2.0 | 1.0 | 1.0 | 3.0 | 4 |
| panelist C | 1.0 | 1.0 | 3.0 | 2.0 | 1.0 | 3.0 | 3 |
| panelist D | 2.0 | 1.0 | 2.0 | 2.0 | 1.0 | 3.0 | 3 |
| panelist E | 1.0 | 1.0 | 2.0 | 1.0 | 1.0 | 3.0 | 4 |
| average point | 1.6 | 1.4 | 2.2 | 1.8 | 1.0 | 3.0 | 3.8 |

**(Table 45)**

| crude diglycosidase (100 units) | | | | | | | |
|---|---|---|---|---|---|---|---|
| panelist | taste | | | aroma | | | total evaluation |
| | freshness | bitterness | astringency | sweet aroma | coarse tea odor | fresh aroma | |
| panelist A | 2.0 | 3.0 | 2.0 | 3.0 | 1.0 | 3.0 | 4 |
| panelist B | 2.0 | 3.0 | 3.0 | 2.0 | 1.0 | 2.0 | 4 |
| panelist C | 1.0 | 2.0 | 3.0 | 2.0 | 1.0 | 3.0 | 3 |
| panelist D | 2.0 | 2.0 | 2.0 | 2.0 | 1.0 | 2.0 | 2 |
| panelist E | 1.0 | 2.0 | 2.0 | 2.0 | 1.0 | 3.0 | 3 |
| average point | 1.6 | 2.4 | 2.4 | 2.2 | 1.0 | 2.6 | 3.2 |

**(Table 46)**

| crude diglycosidase (1000 units) | | | | | | | |
|---|---|---|---|---|---|---|---|
| panelist | taste | | | aroma | | | total evaluation |
| | freshness | bitterness | astringency | sweet | tea odor | fresh aroma | |
| panelist A | 2.0 | 3.0 | 2.0 | 3.0 | 1.0 | 1.0 | 3 |
| panelist B | 2.0 | 4.0 | 3.0 | 3.0 | 1.0 | 2.0 | 4 |
| panelist C | 1.0 | 3.0 | 2.0 | 2.0 | 1.0 | 1.0 | 2 |
| panelist D | 1.0 | 2.0 | 2.0 | 2.0 | 1.0 | 2.0 | 2 |
| panelist E | 2.0 | 3.0 | 2.0 | 3.0 | 1.0 | 2.0 | 2 |
| average point | 1.6 | 3.0 | 2.2 | 2.6 | 1.0 | 1.6 | 2.6 |

**(Table 47)**

| purified diglycosidase (100 units) | | | | | | | |
|---|---|---|---|---|---|---|---|
| panelist | taste | | | aroma | | | total evaluation |
| | freshness | bitterness | astringency | sweet aroma | coarse tea odor | fresh aroma | |
| panelist A | 1.0 | 2.0 | 2.0 | 2.0 | 1.0 | 3.0 | 5 |
| panelist B | 2.0 | 1.0 | 1.0 | 3.0 | 1.0 | 3.0 | 4 |
| panelist C | 1.0 | 2.0 | 2.0 | 2.0 | 1.0 | 3.0 | 4 |
| panelist D | 2.0 | 2.0 | 1.0 | 2.0 | 1.0 | 3.0 | 3 |
| panelist E | 1.0 | 2.0 | 2.0 | 3.0 | 1.0 | 2.0 | 4 |
| average point | 1.4 | 1.8 | 1.6 | 2.4 | 1.0 | 2.8 | 4.0 |

The above-mentioned identification results of aroma components teach that aroma components are reinforced by addition of a diglycosidase like in the case of Example 4 (in the case of enzyme treatment of tea leaf extraction liquid). From the sensory evaluation, it is shown that sweet aroma and fresh aroma and the like increased, and a flavor was improved. Thus, it was shown that production of a black tea beverage (or, tea leaf for black tea beverage capable of providing a black tea beverage having an improvedflavor in extraction) having an improved flavor is possible by incorporating a process of diglycosidase treatment into production processes.

### INDUSTRIAL APPLICABILITY

According to the present invention, there can be provided a tea beverage having an improved flavor by reinforcement of aroma components, and a tea leaf for tea beverage which can be utilized in production thereof. Since a diglycosidase derived from a microorganism used in the present invention can act also on a precursor (disaccharide glycoside) of an aroma component which is a substrate on which the same kind of enzyme (ß-primeverosidase) contained in a tea leaf cannot act, an aroma component can be extracted from this precursor to improve a flavor.

By using an enzyme (diglycosidase) derived from a microorganism, production of a tea beverage manifesting little irregularity in flavor between production lots and showing stable quality in aroma is possible.

Further, by controlling the use amount of an enzyme, extent of reinforcement of an aroma component can be regulated, and a tea beverage having various aroma balance and a tea leaf for tea beverage which can be utilized in production thereof can be provided.

Particularly, if the present invention is applied to tea leaves of low grade, such as tea leaves used in tea bags and the like, an effective reinforcement of an aroma component can be expected.

The present invention is not limited only to the description of the above embodiments. A variety of modifications which are within the scopes of the following claims and which are achieved easily by a person skilled in the art are included in the present invention.

## Claims

1. A method of producing a tea beverage, comprising an enzyme treatment process of allowing a diglycosidase derived from a microorganism to act.

2. The production method according to Claim 1, wherein said enzyme treatment process comprises adding a diglycosidase derived from a microorganism in part of the process of producing a tea leaf for tea beverage.

3. The production method according to Claim 2, wherein said part of the process of producing is one or more selected from a coarse kneading process, rollingprocess, intermediate kneading process and fine kneading process.

4. The production method according to Claim 1, wherein said enzyme treatment process comprises adding a diglycosidase derived from a microorganism and causing an enzymatic reaction, in extracting a tea from a tea leaf for tea beverage or on an extracted tea.

5. A method of producing a tea beverage, **characterized by** adding a diglycosidase derived from a microorganism in a rolling process.

6. The production method according to Claim 1, wherein said diglycosidase is derived from Penicillium multicolor.

7. The production method according to Claim 1, wherein said diglycosidase is derived from Aspergillus fumigatus.

8. The production method according to Claim 1, wherein said tea beverage is a non-fermented tea, semi-fermented tea, complete-fermented tea or post-fermented tea or a blend tea containing two or more of them.

9. A tea beverage produced by the production method according to Claim 1.

10. A tea beverage having a flavor improved by the action of a diglycosidase derived from a microorganism.

11. A method of producing a tea leaf for tea beverage, comprising an enzyme treatment process of allowing a diglycosidase derived from a microorganism to act on a tea leaf.

12. The production method according to Claim 11, wherein said enzyme treatment process comprises adding a diglycosidase derived from a microorganism in part of the process of producing a tea leaf for tea beverage.

13. The production method according to Claim 12, wherein said part of process of producing is includes one or more selected from a coarse kneading process, rolling process, intermediate kneading process and fine kneading process.

14. A method of producing a tea leaf for tea beverage, comprising adding a diglycosidase derived from a microorganism in a rolling process.

15. The production method according to Claim 11, wherein said diglycosidase is derived from Penicillium multicolor.

16. The production method according to Claim 11, wherein said diglycosidase is derived from Aspergillus fumigatus.

17. The production method according to Claim 11, wherein said tea leaf for tea beverage is a non-fermented tea, semi-fermented tea, complete-fermented tea or post-fermented tea or a blend tea containing two or more of them.

18. A tea leaf for tea beverage produced by the production method according to Claim 11.

19. A tea leaf for tea beverage having a flavor improved by the action of a diglycosidase derived from a microorganism.

20. A tea leaf for tea beverage containing an added diglycosidase derived from a microorganism.

21. An instant tea comprising a liquid or powder composition prepared by concentrating a tea beverage, and a diglycosidase derived from a microorganism.
